# EUROPEAN PATENT APPLICATION

(11) **EP 4 839 007 A1**
(43) Date of publication of application: **11.11.2026**
(21) Application number: 25175167.3
(22) Date of filing: 08.05.2025
(51) Int. Cl.: H04W 76/30, H04W 4/70

(54) **INTERNET OF THINGS DEVICE AND READER PARTICIPATING IN AN IOT TRANSACTION PROCEDURE**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to an Internet of Things, loT, device comprising the following. A transceiver of the loT device receives a transaction-related message from a reader. Said message includes a release indication that indicates whether or not to release a previous transaction performed by the loT device with the reader. Further, a circuitry of the loT device determines how to respond to the message, based on the release indication and based on a transaction currently performed by the loT device.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0 or version 18.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, while they are different in that the URLLC service may preferably require ultra-low latencies.

A second objective is to achieve forward compatibility, which facilitates a completely new system design and/or the introduction of novel features.

### SUMMARY

One non-limiting and exemplary embodiment facilitates providing an loT device to perform an improved loT transaction procedure.

In an embodiment, the techniques disclosed here feature an Internet of Things, loT device comprising the following. A transceiver of the loT device receives a transaction-related message (e.g., a paging message or RAR) from a reader. Said message includes a release indication that indicates whether or not to release a previous transaction (e.g., a transaction that is still ongoing or already completed successfully) performed by the loT device with the reader (e.g., releasing resulting in canceling the previous transaction, such that it is no longer ongoing at loT device). Further, a circuitry of the loT device determines how to respond to the message (e.g., performing a new transaction and canceling any ongoing transaction if any, or not performing a new transaction), based on the release indication (e.g., whether indication is True or False) and based on a transaction currently performed by the loT device (e.g., whether still ongoing or already completed).

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which the improved procedures of the present disclosure may be applied;
- **Fig. 2**: shows an overview of an A-loT system,
- **Fig. 3**: illustrates a first topology of an loT communication between a base station and an loT device,
- **Fig. 4**: illustrates a second topology of an loT communication between a base station and an loT device, with an intermediate node,
- **Fig. 5**: illustrates an exemplary implementation of a D2R transmission in the first topology of Fig. 3,
- **Fig. 6**: illustrates an exemplary implementation of a D2R transmission in the second topology of Fig. 4,
- **Fig. 7**: illustrates an exemplary implementation of D2R and R2D transmissions in the second topology of Fig. 4,
- **Fig. 8**: illustrates an access procedure, including the message exchange, between an loT device and a reader, wherein the access procedure comprises different operations, such as the random access procedure, the inventory operation, and the command-response operation,
- **Fig. 9**: illustrates Step B of Fig. 8 in more detail,
- **Fig. 10**: illustrates an exemplary and simplified structure of an loT device and a reader,
- **Fig. 11**: illustrates a simplified and exemplary loT device structure according to a basic implementation of the improved loT transaction procedure,
- **Fig. 12**: is a sequence diagram for an exemplary loT device behaviour in line with the loT device of Fig. 11,
- **Fig. 13**: illustrates a simplified and exemplary reader structure according to an exemplary implementation of the improved loT transaction procedure,
- **Fig. 14**: is a sequence diagram for an exemplary reader in line with the node of Fig. 13,
- **Fig. 15**: is a first signaling diagram of an exemplary and simplified implementation of the improved loT transaction procedure,
- **Fig. 16**: is a second signaling diagram of an exemplary and simplified implementation of the improved loT transaction procedure,
- **Fig. 17**: is a third signaling diagram of an exemplary and simplified implementation of the improved loT transaction procedure,
- **Fig. 18**: is a signaling diagram of an exemplary and simplified implementation of the improved loT transaction procedure, in which a paging message is used to carry the release indication,
- **Fig. 19**: is a signaling diagram of an exemplary and simplified implementation of the improved loT transaction procedure, in which a RAR message is used to carry the release indication,
- **Fig. 20**: is a signaling diagram of an exemplary and simplified implementation of the improved loT transaction procedure, in which a R2D sync message is used to carry the release indication,
- **Fig. 21**: is a sequence diagram for the loT device behaviour in line with an exemplary and simplified implementation of the improved loT transaction procedure,
- **Fig. 22**: is a signaling diagram of messages exchanged between the loT device and reader, which respectively follow one exemplary implementation of the improved loT transaction procedure,
- **Fig. 23**: is another signaling diagram of messages exchanged between the loT device and reader, which respectively follow one exemplary implementation of the improved loT transaction procedure,
- **Fig. 24**: is another signaling diagram of messages exchanged between the loT device and reader, which respectively follow one exemplary implementation of the improved loT transaction procedure,
- **Fig. 25**: is another signaling diagram of messages exchanged between the loT device and reader, which respectively follow one exemplary implementation of the improved loT transaction procedure,
- **Fig. 26**: is another signaling diagram of messages exchanged between the loT device and reader, which respectively follow one exemplary implementation of the improved loT transaction procedure, and
- **Fig. 27**: shows exemplary functional split options in 5G open-radio access network (O-RAN).

### DETAILED DESCRIPTION

### 5G NR system architecture and protocol stacks

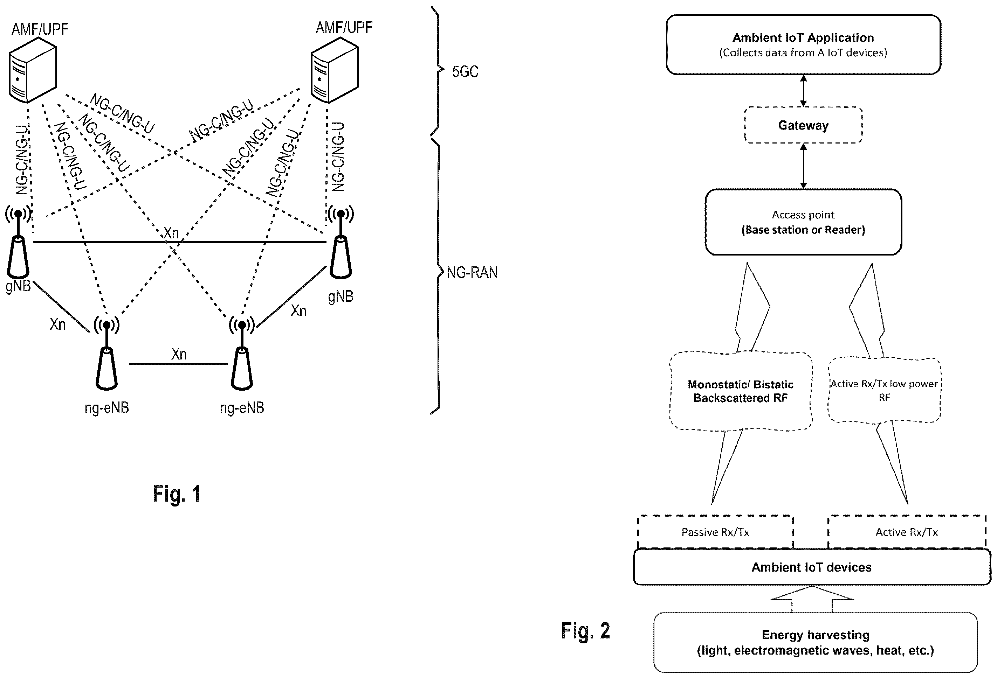

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in **Fig. 1** (see e.g., 3GPP TS 38.300 v18.3.0, section 4).

### Ambient IoT Devices

An ambient Internet of Things device (A-loT device) is a new type of device, introduced to be supported by 5G NR or a later generation (e.g., 6G) technology. A-loT devices can be understood as loT devices that have the ability to harvest energy from natural or ambient sources, such as vibration, light, heat or a carrier wave (CW), e.g., provided by the base station, or the intermediate node, or a separate CW node. The energy harvesting technology can be crucial for the loT market to reduce the device operation costs. The power consumption and complexity of A-loT devices can be less compared to existing 3GPP technologies, such as MTC (machine type communication), NB-loT (NarrowBand loT), or RedCap (Reduced Capability). For instance, an ambient loT device can be operated with a small battery or even without a battery and further may not require battery replenishment. Another term is "zero energy device", due to their capability to operate without a dedicated battery source. An A-loT device may be an ultra-low-complexity device with ultra-low power consumption for very-low-end loT applications. Examples for A-loT devices include - without any limitation - wearables, smart home devices, automotive devices, sensors, smart keys, healthcare devices, etc.

A-loT devices may lack and nor support RRC states (e.g., RRC Connected, IDLE, INACTIVE). For example, the A-loT protocol stack may support only a Medium-Access-Control (MAC) layer and a physical (PHY) layer, which can provide service to the topmost layer (e.g., A-loT application layer) to send/receive data over the A-loT air interface, i.e., the interface between the reader and the device. Such new specifically designed operation states may have to be defined and configured for A-IoT devices. For example, new states may likely be introduced for the MAC layer, such as one or more of ON, OFF, and RETENTION/SLEEP states, which may be useful to support discontinuous transmission/reception (e.g., DRX) or energy saving criteria of low power devices. ARQ (Automatic Repeat Request) and Hybrid ARQ transmission protocols that ensure reliable data delivery may or may not be supported by A-loT devices. A-loT devices have limited power available, resulting in reduced time periods of communication capability. Further, full device registration with the network might be difficult for loT devices, although a simplified registration or identification might be supported.

A-loT devices may not support mobility (e.g., no cell selection/re-selection/handover functions, as in legacy NR).

The above characteristics of an A-loT device facilitate the wide deployment of the devices for various applications. The integration of A-loT devices into 5G and future technologies pose a demanding problem that is addressed in the present disclosure.

Importantly, it is noted that the present disclosure is not limited to A-loT devices, but may also be applicable to any other loT devices (e.g., other types, such as Critical IoT, Massive loT, Broadband IoT, Narrow-Band loT etc.) or even more generally to other devices (not necessarily loT devices) that benefit from the improvements of the present disclosure. The terms loT device and A-loT device and device are used interchangeably in this disclosure as examples of such devices; alternatively, the terms low-power-consumption device or low-complexity transceiver device could be used.

**Fig. 2** is an overview of an A-loT system, including the Ambient loT devices, an access point, an optional gateway and including A-loT applications. As apparent from Fig. 2, the A-loT devices may harvest energy from their environment, i.e. their ambient. The A-loT devices may be able to communicate using passive reception and transmission (e.g., passive Rx/Tx) by monostatic or bistatic backscattering or alternatively may have an active Rx/Tx (low power) radio frequency (RF) part. The A-loT devices may communicate via an access point (or a base station or reader) with the A-loT applications that may collect data from the A-loT devices. A gateway may be optionally between the access point and the A-loT applications.

More details on use cases, deice constraints and performance requirements as well as KPIs (Key Performance Indicators) can be obtained from the document 3GPP TR 22.840 v19.0.0. Moreover, 3GPP RAN working groups have recently completed the Rel. 18 study item on A-loT and started the work item for preparing a standard specification of A-loT (see RP-243326 and TR 38.769 v2.0.0).

### IoT Topologies

Two different topologies have been discussed for the loT communication between the loT device and the network. More details on topologies can be obtained from the documents 3GPP TR 22.848 v19.0.0 and TR 22.840 v19.0.0. However, the present disclosure applies to other topologies as well.

In the following, a node communicating with an loT device, for example, receiving data from or transmitting data to the loT device, may be also referred to as a reader. The reader can be e.g. a base station, or a UE etc.

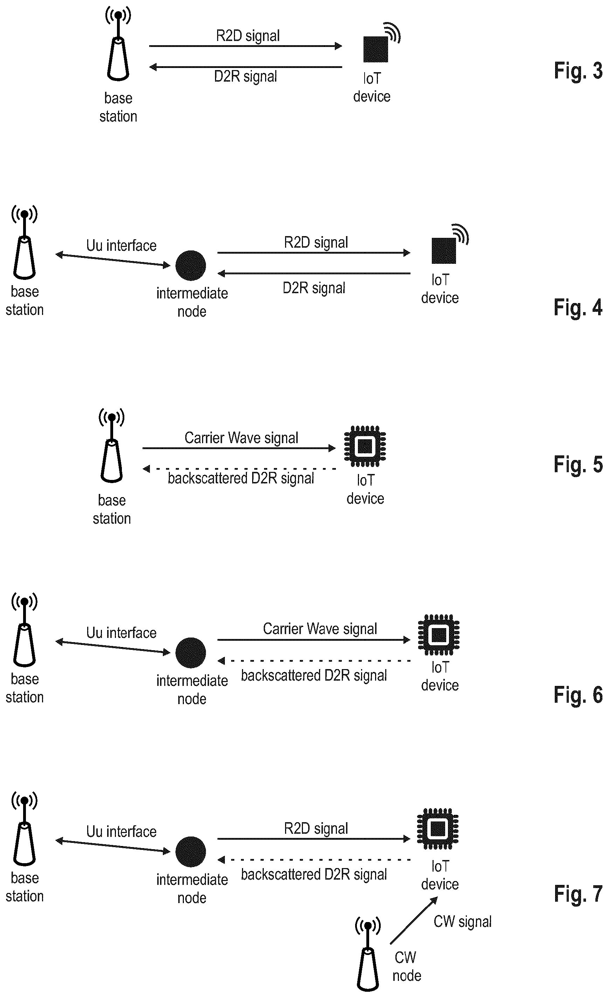

In a first topology as illustrated in **Fig. 3****,** an loT device directly and bidirectionally communicates with a reader (such as a base station) over a wireless channel. In general, the A-loT device may be any kind of loT device. The communication may include transmitting and/or receiving signals that may carry data information or control information. The data information may include e.g. user data, such as measurements results obtained by the loT device. The control information can be signaling information or signals such as control signals, reference signals or the like. In a further variant, not explicitly illustrated in Fig. 3, the direct communication with the base station may further include communication via one or more distributed units, DU, of the base station. A base station may operate one or more cells.

In a second topology as illustrated in **Fig. 4****,** an loT device bidirectionally communicates with an intermediate node that is located between the loT device and the reader (again e.g., a base station). The intermediate node could be for instance a User Equipment, an Integrated Access and Backhaul (IAB) node, a relay, a Network-Controlled Repeater (NCR) or any other suitable entity that supports loT. The intermediate node is connected to both the base station and the loT device and transfers the communication (e.g., user data and/or signaling) between the loT device and the base station. The base station may communicate with the intermediate node via a first interface (exemplified in Fig. 4 as the Uu interface, e.g., corresponds to UE - gNB interface in 5G NR). The intermediate node may communicate with the loT device via a second interface. The present disclosure is not limited to any specific interface definition. In general, the first and second interfaces in Fig. 4 maybe for example both wireless interfaces.

For any topology in general, the reader is an equipment that directly communicates with the A-loT device, in the first topology the reader is a base station, and in the second topology the reader is an intermediate node (e.g., UE). Communication channels between the A-loT reader and A-loT device are herein referred to as reader to device (R2D) for data transmissions from reader to device, and device to reader (D2R) for data transmissions from device to reader.

Recently, 3GPP has envisaged to mainly consider the first topology for Rel. 19 of 5G NR (and as a less relevant consideration considers an indoor Scenario 1). For instance, Topology 1 relates that the loT device and reader communicating directly without an intermediate node, and Scenario 1 relates to the case where both the loT device and the reader are located indoors.

**Fig. 5** illustrates an exemplary implementation of a D2R transmission in the first topology of Fig. 3, where the base station functions as the reader and generates the Carrier Wave, CW, signal for the loT device. The base station transmits the CW signal to the loT device, and the loT device may backscatter and modulate the CW signal to generate the backscattered signal as the D2R signal. Correspondingly, **Fig. 6** illustrates an exemplary implementation of a D2R transmission in the second topology of Fig. 4, where the intermediate node (e.g., a UE) functions as a reader and generates the CW signal for the loT device. The intermediate node transmits the CW signal to the loT device, and the loT device may backscatter and modulate the CW signal to generate the backscattered signal as the D2R signal.

**Fig. 7** illustrates an exemplary implementation of D2R and R2D transmissions in the second topology of Fig. 4, where an intermediate node (e.g., a UE) functions as a reader. To generate the R2D signal, the intermediate node generates the carrier wave signal, which is then modulated by the intermediate node to generate the R2D signal. The CW signal is generated by a CW node, which is arranged separately from the intermediate node, and is transmitted to the loT device. The loT device backscatters the CW signal to generate the backscattered signal as the D2R signal, which is transmitted to the UE.

### IoT Communication

Communication by loT devices covers both an active transmission as well as a passive backscattering (see Fig. 2). In particular, backscattering devices do not necessarily have an active transmission component but are able to modulate information on the signal (e.g., carrier wave mentioned above) received from another node (e.g., CW node, such as a UE, a WiFi node, or access point). Active transmission allows a larger range and a better quality of service (QoS), compared to backscattering devices. Energy-efficient communication is one key aspect for Ambient loT devices. In said respect, an On-Off-Keying (OOK) line coding scheme can be used as an example modulation technique for loT communication in 3GPP 5G and future (e.g., 6G) communication systems, due to its simplicity and energy efficiency.

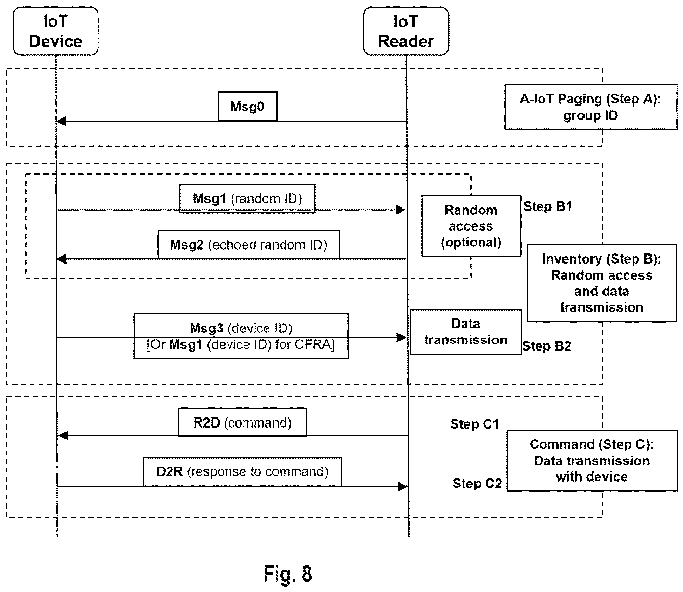

Ambient loT devices may support different types of services, such as "inventory" and "command". For either of the service request types, a baseline communication procedure may be exemplarily assumed, as illustrated in **Fig. 8****.** In a first step (step A), an initial access trigger is sent to the device, followed by a first data communication procedure and including an optional random-access-like procedure (step B). Additionally, a further second data communication procedure between the reader and loT device (step C) can be part of the procedure. Thus, the reader may transmit a message such as an initial trigger message, which is also referred to as a paging message, indicating one or multiple loT devices that should respond. In response, the triggered loT device(s) may perform a random-access-like procedure and/or data communication.

More details on an exemplary implementation can be obtained from the document 3GPP TR 38.769 v2.0.0, e.g., section 6.3.1.

Correspondingly, the initial trigger message may comprise suitable identification of a single loT device or a group of loT devices. Furthermore, in another example, the initial trigger message may not comprise any identification, in which case any and all loT devices that receive the initial trigger message could respond.

No agreements have been reached regarding an ID for an loT device, including the exact format so as to uniquely identify an loT device (at least in the 3GPP system). It can be expected that a larger number of loT devices will be operational within a network (or serviced by an access point). The loT device ID might have a large size in order to facilitate an unambiguous identification within the whole network. The device ID is for instance generated by an entity of the core network.

In addition or alternatively, an access stratum, AS, ID could be used to uniquely identify the loT device in the area of one or a few readers. The AS ID can thus be shorter (e.g., 8 or 16 bits could be sufficient) than a (full) device ID (e.g., a non-AS ID) usable across multiple readers (e.g., as much as 64 bits might be required). Thus, using an AS ID would allow saving overhead when being used in messages exchanged between the loT device and the reader. The AS ID is e.g., generated by the reader. Another example for an loT device is the EPC (Electronic Product Code), which is designed to be unique across all physical objects in the world, over all time, and across all categories of physical objects, resulting in a very large size of e.g. around 100 bits. A random ID (e.g., of 16 bits) can be generated by the loT device during random access, and is typically used for only the limited time of the random access.

Details on the initial access for loT communication have been discussed already as well. The initial access procedure of loT devices can be achieved for example in three steps or in two steps. Additionally, or alternatively, it is possible that the initial access procedure of loT devices is performed by four or more steps.

No agreements have been reached in view of a down selection for the various types of accesses, e.g., including a 2-step random access, a 3-step random access, and a Contention-Free Random Access (CFRA). Further, a unified design could be used where at least 3-step and 2-step procedures are specified.

Different options on how to perform the initial access procedure will be explained in connection with **Fig. 8****,** which illustrates the message exchange between the loT device and reader. It illustrates the loT paging in a Step A, subsequently the inventory (Step B), and then the Command-Response (Step C).

In more detail, Step A of Fig. 8 illustrates the loT paging. The reader, here in the role of a paging entity (e.g., based on a service request from the core network, CN) sends an loT paging message, triggering one or more loT devices to respond. In one example, the one or more paging messages required to complete the service request from the core network can be related to one transaction, e.g., identified by an ID. Another service request from the CN may trigger a next transaction with another ID.

In the example of Fig. 8, the initial paging is based on a group ID, which could be included in Msg0; thus, the paging is addressed to the loT devices that belong to said paged group having assigned the group ID. However, it is not necessary that the paging is based on a group ID, and other schemes may be equally possible (e.g., ID of a single loT device or the initial trigger message may not comprise any specific identification, in which case any and all loT devices that receive the initial trigger message could respond).

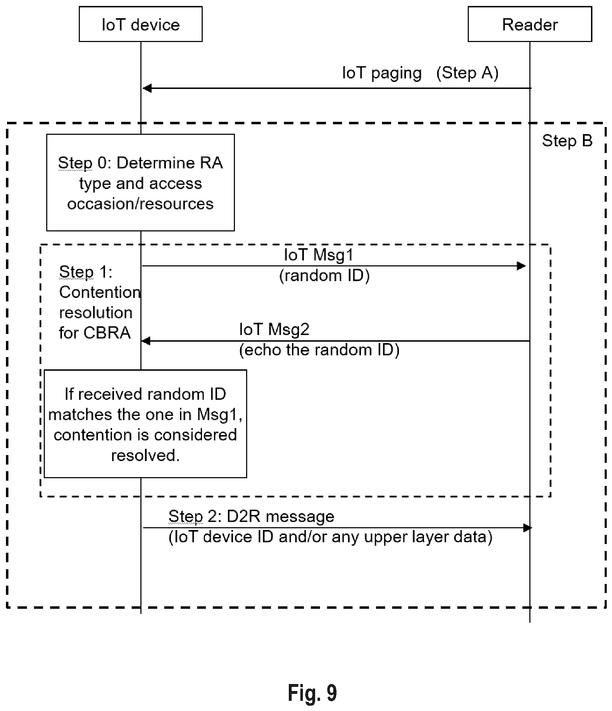

The inventory procedure of Step B includes the data transmission (e.g., Msg3 including the device ID) and before that may optionally include a random access procedure between the reader and the loT device. One example implementation of Step B, having three Steps 0-2 is illustrated **in** **Fig. 9****.**

In Step 0 of Step B (as shown in Fig. 9), the loT device may determine the access type, for example, it may determine the random access (RA) type being contention based or contention free. In one example, the loT paging message could provide the loT device with the necessary information regarding the access type.

Further, in Step 0, the device may determine an access occasion and/or resource for the next D2R transmission. For example, if the device determines as RA type for a contention-based random access (CBRA), the loT device may proceed to Step 1 of Step B (as shown in Fig. 9). Alternatively, if the device determines, for example, a contention-free random access (CFRA), the loT device may proceed directly to Step 2 of Step B, skipping the random access of Step 1 of Step B.

Exemplarily assuming a contention-based access (CBRA), a random access is performed by the loT device with the reader, wherein the loT device transmits an Msg1 with a random ID (see Step 1 of Step B of Fig. 9). For instance, the random ID is generated by the loT device (e.g., it may be generated randomly or generated based on the loT device ID) in response to the initial trigger message (Msg0).

The reader echoes the received random ID in a Msg2 (e.g., including the same received random ID in Msg2) (see Step 1 of Step B of Fig. 9). The loT device considers the contention resolution successful, if the Msg2 is received and includes the same random ID as in Msg1.

Then, to complete the inventory procedure, in Step 2 of Step B, as shown in Fig. 9, the loT device may transmit a Msg3 to the reader, including for instance the device ID (such as a permanent device ID, e.g. an ID used on EPC-level, or an ID used in the core network, e.g. an ID used on NAS-level, and/or any other upper-layer data depending on the upper-layer request). Communicating the Msg3 can be seen as being part of step B.

Here, at least a 3-step inventory procedure is shown for Rel-19, but future releases may introduce shorter formats, e.g. a 2-step inventory procedure also for CBRA.

In the case of CBRA, since the loT device already generates a random ID, and sends it to the reader in Msg1 for contention resolution, it is up to the reader to decide whether to reuse this random ID as an identifier for further communication or alternatively to assign an identifier by the reader.

In a contention-free access (CFRA) scenario, the random access Step 1 can be skipped.

The second part of Step B (Step B2 of Fig. 8, Step 2 of Fig. 9) includes the D2R data transmission, in which the loT device sends data (e.g., a device ID and possibly further data) in a D2R message, as part of the inventory procedure. For CBRA, this message is sequentially called as Msg3, while for CFRA the D2R message can be called Msg1 sequentially after the paging message Msg0. The device ID can be expected to uniquely identify the loT device at least within the 3GGP system.

Optionally, the D2R message (e.g., Msg1 or Msg3) may further include any other upper-layer data (e.g., as requested by Msg2 or depending on the upper-layer request).

For Step C (Command and Response) of Fig. 8, the reader may send a command to the triggered loT device (Step C1), and the loT device may respond to the corresponding command triggered by reader (Step C2) with a command response message that again may carry data (e.g., device ID and upper layer data).

At present, the RAN2 working group has agreed to support at least two types of procedures for Release 19: "inventory only" and "inventory and command". The procedure with steps A and B of Fig. 8 may be termed for instance as "inventory-only" (or "inventory"), while the procedure with steps A, B, and C of Fig. 8 may be termed "inventory and command". The command is Step C of Fig. 8.

### Initial access and re-access for IoT devices

As apparent from above, 3GPP intends implementing an loT access procedure, according to which a plurality of loT devices can be simultaneously triggered (e.g., by a reader) to access the channel to transmit data to the reader. Consequently, in response to a suitable initial trigger message, a plurality of loT devices will try to access the same channel to the reader. This may be lead to interference and contention between the various loT devices, which either delays or prevents loT devices from successfully accessing the channel and performing the access procedure with the reader. Another failure reason could be that a device is not sufficiently charged yet and therefore cannot respond to the first (or several) rounds of paging. The loT access and data transmission may thus fail for many reasons and this may apply to any message transmitted during Steps A and B and C, which may fail to reach the intended destination. An access performed by the loT device can be considered successful for example when the loT device has completed all steps involved for the access procedure. The required steps depend on the type of access procedure to be performed, e.g., whether only inventory or inventory and command is to be performed to successfully complete the access procedure.

Thus, a reader typically cannot reach all targeted devices in a coverage area by a single paging round for one transaction. As a result, multiple/subsequent paging messages that are associated with the same service request from the core network (CN) may need to be supported. It may not be sufficient that the reader sends only an initial paging message to trigger the initial access (attempt) by the loT devices, but may also decide to trigger a re-access for those loT devices, which did not succeed in the first access attempt. It is exemplarily assumed that re-access for failed loT devices is controlled by the reader, by transmitting one or more re-access trigger messages.

Controlling a re-access for failed loT devices can be particularly beneficial to overcome collision among devices when paging is triggered for a large group, where devices experience contention within the group to transmit upon one (or few) D2R occasion.

Particularly, the possibility of supporting a failure mechanism was discussed in 3GPP for devices that fail to complete an access procedure or data transmission as per step B (see Fig. 8) or in general any data transmission in D2R as per step C (see Fig. 8). Those failed devices can perform re-access in the next available occasions, based on a further paging sent by the reader for re-access, and can repeat the steps from A, B and C.

In one example, a NACK-based mechanism can be considered for D2R messages to facilitate re-access for at least the D2R transmission in Step B, e.g., for Msg3 for CBRA. Correspondingly, when the reader transmits a NACK after Msg3 for CBRA, the loT device considers the access failed and as an example, a further paging message from the reader may trigger the loT device to attempt re-access. When no NACK message from the reader is considered, then, the loT device may implicitly consider it as an acknowledgement of the previous transmission.

There may be a need to differentiate the Msg1 resources for CBRA random access between initial access and re-access. The loT device is not expected to autonomously repeat the access procedure in another opportunity, but rather the loT device is expected to follow corresponding triggers from the reader. For example, in case a message in Step A or Step B fails, the loT will have to follow the reader by repeating the access procedure in another opportunity controlled/provided by the reader (i.e., retry the access), for example in response to receiving a further initial trigger message (Msg0).

On the other hand, in one currently-applicable example, no NACK-based mechanism may be considered for Msg1 for CFRA, because the re-access mechanism is currently not considered for CFRA. However, the NACK-based mechanism may be adopted in the future for the Msg1 of CFRA as well, corresponding to the Msg3 of CBRA.

Regarding re-access, it would be beneficial if devices that have successfully completed a paging procedure (e.g., as in steps [A to B] or [A to C]) need not respond to paging triggers sent for re-access, which would allow to avoid duplicate responses. In order to facilitate distinguishing between initial access and re-access, it may be possible to consider an ID in the paging message, so as to assist in avoiding duplicated access for the same service request that triggered the reader to transmit the paging message to the loT devices. A suitable ID could be generated by the reader itself or another entity (such as an entity from the core network, such as the entity transmitting the service request to the reader). In one example, for one service request one and the same ID is used, while using a different ID for the next service request. Based on such an ID information, the loT device could determine whether to skip sending a response to the paging (e.g., if initial access was successful).

Such an ID, here e.g. termed transaction ID, can thus be used to track different access procedures, which may also be called transactions due to the access being directed at transferring of inventory data (e.g., device ID, see Step B2 of Fig. 8)) or command and response data (e.g., see Steps C1 and C2 of Fig. 8). Other possible terms for the transaction ID are access procedure ID (or simply access ID), paging ID, or transaction number, access number, paging number etc.

Correspondingly, for one transaction with one transaction ID, the reader attempts to reach the loT devices, which may perform an initial access procedure, and possibly have to perform one or more re-access procedures if the initial access procedure fails.

Moreover, 3GPP has reached further agreements on loT access and communication. It has been agreed that an IoT device is expected to only perform one procedure at a time. The procedure refers e.g. to a communication procedure between the loT device and the reader, particularly a communication procedure triggered by a paging message transmitted from the reader to the loT device(s), e.g., in response to service request from the core network. In other words, the loT device is expected to only perform one communication procedure with a reader at a time. In still other words, the loT device is expected to only perform one transaction with a reader at a time.

Such a limitation (called exemplarily transaction limitation in the following) allows to reduce the complexity and energy usage of an loT device.

Such a transaction limitation may apply to all loT devices or to a subset of loT devices only (e.g., depending on the category of loT devices).

Furthermore, even though at present 3GPP agreed to a transaction limitation of only one procedure at the same time, in the future the transaction limitation could be less strict and even flexible in that it allows a maximum number of concurrent transactions being more than one, such as two or three or four or five etc. concurrent transactions being performed by the loT device at the same time.

In still another example, the transaction limitation is applied per reader, such that the loT device is allowed to only process one transaction at the same time from each of a plurality of readers.

In one example, different procedures are distinguished by suitable IDs in the paging messages, such as the above-mentioned transaction ID. Thus, the loT device may determine whether a new paging message refers to the ongoing transaction or to a new transaction, based on the transaction ID carried in the new paging message.

For sake of clarity and ease of explanation, in the further present disclosure, it is exemplarily assumed that a transaction limitation of one transaction at the same time across plural readers is applied by the loT device.

### Further improvements

As a consequence of the transaction limitation, if the loT device is paged (for a new service request), while one (or more, dependent on the transaction limitation) procedure is still ongoing, there is a need to determine an advantageous behaviour of the loT device and reader.

According to one possibility, the loT device could ignore the new paging and proceed with the currently-performed ongoing procedure. Only after (successfully) completing the ongoing procedure, the loT device would react to a new paging. Such a behaviour however could result in several drawbacks. One drawback is that the loT device could be stuck in a potential deadlock. For instance, although a reader may send a NACK to trigger re-access, the loT device may miss the NACK and thus may consider the ongoing procedure as not completed. Thus, the loT device would ignore any new paging messages, possibly indefinitely. In another example, the reader may go through a power cycle / failure, while the loT device is in the middle of a transaction. As a result, after the reader recovers from the power cycle / failure, the reader would transmit a new paging, which is however ignored by the loT device, because the previous transaction is still ongoing.

According to another possibility, the loT device, in response to the new paging, could cancel the currently-performed ongoing procedure, and start a new procedure according to the new paging. This would allow the loT device to comply with the transaction limitation of performing only one transaction at a time. The loT device would thus be required to always respond to the latest paging (and corresponding latest service request). This would allow to avoid the deadlock drawback discussed above, however would result in several drawbacks instead.

One drawback would be that the radio resources would be inefficiently utilized. For example, after sending the Msg1 by the loT device, the loT device is waiting for the Msg2 response from the reader, e.g., to know whether contention is resolved. If the loT device responds to another paging message (e.g., from the same reader or a different reader) and abandons the currently ongoing procedure, the radio resources used for Msg1 transmission would have been wasted.

A further drawback is that a potential ping-pong between different services or readers may occur. In particular, different paging messages may be repeatedly transmitted by a reader for different service requests triggered by the core network. Or, different paging messages may be transmitted by different readers. In any case, the loT device could end up with repeatedly interrupting ongoing procedures between different services or reader, potentially without being able to complete one procedure.

Therefore, the inventors have identified the possibility to define an improved loT transaction procedure and parts thereof, which facilitate meeting the above needs and avoiding one or more of the above described disadvantages. The present invention relates to different solutions and variants for such an improved loT transaction procedure performed between a reader and an loT device.

### Solutions

In the following solutions, IoT devices, nodes, integrated circuits and respective methods are provided for the improved loT transaction procedure to facilitate meeting the above needs. The present disclosure addresses the integration of loT devices into communication networks, particularly, according to 5G communication systems or future (e.g., 6G) communication systems. In particular, while 3GPP is currently developing Rel. 19 of the 5G (-Advanced) mobile communication system, 3GPP has already started planning for the next generation, 6G, of communications systems.

Different implementations and variants of the improved loT transaction procedure will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, but which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g., 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC etc. (see above background discussion).

The term "**IoT device**" covers any loT devices (such as Ambient loT, Critical loT, Massive loT, etc.) but also other devices with power or processing limitations. Correspondingly, the present disclosure is not limited to A-loT devices mentioned above, but may also be applicable to any other loT devices (e.g., other types, such as Critical loT, Massive loT, Broadband loT, Narrow-Band loT etc.) or even more generally to other devices that benefit from the improvements of the present disclosure. For example, the terms loT device and A-loT device are used interchangeably in this disclosure; alternatively, the term low-power-consumption device or low-complexity transceiver device could be used instead as well. Examples for A-loT devices include - without any limitation - wearables, smart home devices, automotive devices, sensors, smart keys, healthcare devices, etc.

The term **"reader"** refers to an entity communicating with an A-loT device and, for example, receiving information from or transmitting information to the A-loT device; it may be also referred to as a "node". The "node/reader" can be for example a base station, or a UE or an intermediate node etc.

The term **"transaction"** refers to a procedure performed between the loT device and the reader, for instance, a communication procedure between the loT device and the reader. According to examples, the transaction can be one of an inventory procedure (which comprises a first D2R data message), of an inventory and command procedure (where the command procedure additionally includes an R2D command message and a D2R command response message, i.e. a second D2R data message) and of a command procedure (see e.g., Fig. 8). In one example, the transaction is triggered at the loT device by a paging message transmitted from the reader. The term "transaction" could be equally replaced with "procedure". Furthermore, when considering that the transaction involves that the loT device performs an access (see also above section "Initial access and re-access for IoT devices"), the term "transaction" could also be replaced with "access".

In one example, the transaction may include a random access procedure between the loT device and the reader (e.g., contention-based random access). The random access procedure for instance may include a first random access message (with a random ID) transmitted by the loT device to the reader, and in response, a random access response (RAR) message from the reader to the loT device (which may echoe the random ID to resolve the contention in favour of said loT device).

In another example, however, the transaction may not need to include a random access procedure e.g., because it involves a contention-free access. In said case, the loT device may directly transmit the first D2R data message to the reader, e.g., as part of the inventory procedure, after starting the transaction in response to the transaction trigger (e.g., paging).

The expression **"release a transaction"** refers to a process, performed e.g. at the loT device, with regard to a previously triggered transaction. Releasing a transaction results in that the transaction is considered to no longer be ongoing, e.g. be completed as a failure or simply canceled/deleted.

Other terms usable instead of "release" could be e.g. "cancel", "clear", "drop", "free" etc. Releasing a transaction could also mean that any stored status or information related to this transaction is cleared from the device memory.

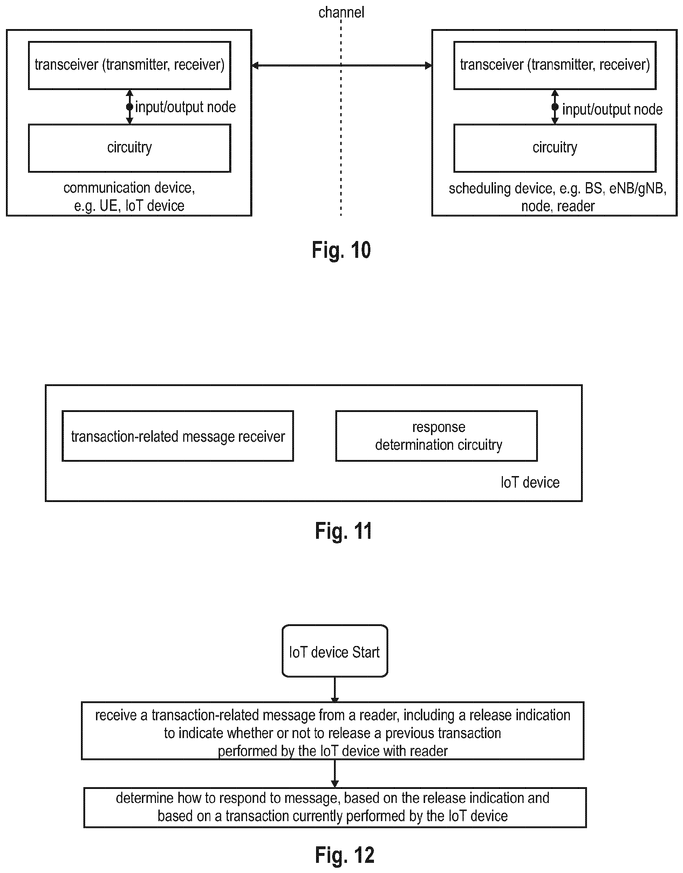

**Fig. 10** illustrates a general, simplified and exemplary block diagram of an loT device (as an example of a communication device) and a node (as an example of a scheduling device, could be also a base station, intermediate node connected to a base station or a CW node or a reader) forming a communication system. In the following, it is exemplarily assumed that the node is a reader.

The communication device (e.g., loT device) may comprise a transceiver and circuitry. The transceiver in turn may comprise and/or function as a receiver and a transmitter. The circuitry (e.g., processing circuitry) may be one or more pieces of hardware such as one or more processors or any LSIs. Between the transceiver and the circuitry there is an input/output point (or node) over which the circuitry, in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The term "transceiver" is used for hardware and/or software components that allow the communication device, and the scheduling device, to transmit and/or receive radio signals over the (wireless) channel, for example, a physical wireless channel. The transceiver, functioning as a transmitter, may be responsible for performing the process of transmitting and other processes related thereto. The transceiver, functioning as a receiver, may be responsible for performing the process of receiving and other processes related thereto, such as monitoring a channel. The transceiver may perform processes and operations, such as transmitting and/or receiving signals, as described with respect to the solutions of this disclosure.

The circuitry may implement control tasks such as controlling the transceiver to transmit user data and control data provided by the circuitry and/or receive user data and control data, which is further processed by the circuitry. The circuitry may also be responsible for performing other processes such as determining, deciding, calculating, measuring, etc. Moreover, the term "circuitry" can also be exemplarily implemented by processing circuitry formed by one or more processors or processing units, etc. The circuitry may perform any processes and operations, such as determinations, as described with respect to the solutions of this disclosure.

The loT device and the reader (e.g., base station) are communicating with each other over a (wireless) physical channel, respectively, using their transceivers. The reader and the loT device are capable of transmitting as well as receiving radio signals via the channel. Together, the reader and the loT device form a communication system, for example, a 5G or future communication system. The communication system may further include other entities such as further base stations, intermediate nodes, reader and/or loT devices. Any of the solutions may be implemented in the loT device, the base station, the reader and/or communication system where appropriate.

Moreover, it is noted that the loT device as described in any of the solutions of this disclosure may be integrated on or as an integrated circuit (IC). Moreover, the integration does not necessarily include the entire loT device, including transceiver and circuitry. For instance, the transceiver is, in general, not necessarily a part of the loT device or the integrated circuit. The loT device may be connected to an external transceiver (module, optionally including an antenna) connected to the loT device over a port on the loT device. A similar structure applies to the reader, which can also be integrated on or as an integrated circuit (IC), be it with or without a transceiver being part of the reader (or integrated circuit)..

Moreover, a computer program is provided including code instructions storable on a non-transitory medium, which when executed on one or more processors, causes the one or more processors to execute a method according to any of the solutions of this disclosure.

The present disclosure relates to different solutions (and respective implementations and variants) of an improved loT transaction procedure. Improved loT devices (such as UEs), improved network devices (e.g., reader) and improved integrated circuits are presented in connection therewith, which participate separately or together in the improved procedures. In the following, although an IoT device is used for the description as an example for the communication device, the description is equally applicable to a more general communication device. Corresponding methods for the loT device behavior and the reader behavior are provided as well. The integrated circuits may correspond to the loT device and reader, and respectively to their behavior.

**Fig. 11** illustrates a simplified and exemplary loT device structure according to a basic implementation of the improved loT transaction procedure presented in more detail below. In one example, the device structure can be implemented based on the general device structure explained in connection with Fig. 10. The various structural elements of the loT device illustrated in said Fig. 11 can be interconnected between one another e.g., with corresponding input/output nodes (not shown) e.g., in order to exchange control and user data and other signals. Although not shown for illustration purposes, the loT device may include further structural elements.

As apparent from Fig. 11, the loT device may include a transaction-related message receiver and a response determination circuitry. The processing circuitry of the general device structure of Fig. 10 can be implemented as the above response determination circuitry of Fig. 11, and can also perform further functions as will be become apparent from below. The transceiver of Fig. 10 can be implemented as the above transaction-related message receiver, and can also perform further functions as will become apparent from below.

One exemplary procedure is implemented by an loT device that includes the following. A transceiver of the loT device receives a transaction-related message (e.g., a paging message or RAR) from a reader. Said message includes a release indication that indicates whether or not to release a previous transaction (e.g., a transaction that is still ongoing or already completed successfully) performed by the loT device with the reader (e.g., releasing resulting in canceling the previous transaction, such that it is no longer ongoing at loT device). Further, a circuitry of the loT device determines how to respond to the message (e.g., performing a new transaction and canceling any ongoing transaction if any, or not performing a new transaction), based on the release indication (e.g., whether indication is True or False) and based on a transaction currently performed by the loT device (e.g., whether still ongoing or already completed).

A corresponding exemplary method comprises the following steps performed by an loT device:
receiving a transaction-related message from a reader, wherein the message includes a release indication that indicates whether or not to release a previous transaction performed by the loT device with the reader,
determining how to respond to the message, based on the release indication and based on a transaction currently performed by the loT device.

A corresponding sequence diagram for an exemplary loT device behaviour in line with the above-discussed loT device and method is presented in **Fig. 12****.**

The above-described improved loT transaction procedure at the loT device facilitates achieving the objective and overcoming at least some of the drawbacks explained above. For instance, the above improved loT transaction procedure clarifies details on how the loT device behaves when receiving a new paging while a previously-triggered transaction is still ongoing at the loT device. The reader is allowed to stay in control as to how the loT device is to behave, particularly regarding whether the new paging should not only result in starting a new transaction but should also result in abandoning the previous (ongoing) transaction at the loT reader or not.

The above improved loT transaction procedure may be performed even without applying the transaction limitation, recently agreed at 3GPP (see above). In said case, the improved loT transaction procedure still allows the reader to control the loT device with regard to previous transactions, based on the release indication.

Furthermore, however, when applying the transaction limitation recently agreed at 3GPP, the improved loT transaction procedure has the advantage that the loT device can be brought out of a potential deadlock situation. The reader can transmit a release indication that indicates to release the previous transaction, such that the loT device can be freed from the device deadlock. The loT device, in response to such a release indication, would release the previous transaction and is able to proceed with a new transaction, while at the same time complying with the transaction limitation.

Moreover, the improved loT transaction procedure allows to efficiently utilize the radio resources. In particular, by specifically controlling whether previous transactions are to be released or not, the reader can limit the number of times that previous transactions are released and thus can reduce wasted resources of such released transactions. Furthermore, a potential ping-pong between different services or readers can be avoided, because the release indication can be specifically set to False, in which case, even if a transaction is currently ongoing at the loT device when receiving a new paging, such ongoing transaction is not canceled in order to start a new transaction.

Further advantages will become apparent from the below description of the various solutions, implementations and variants of the improved loT transaction procedure.

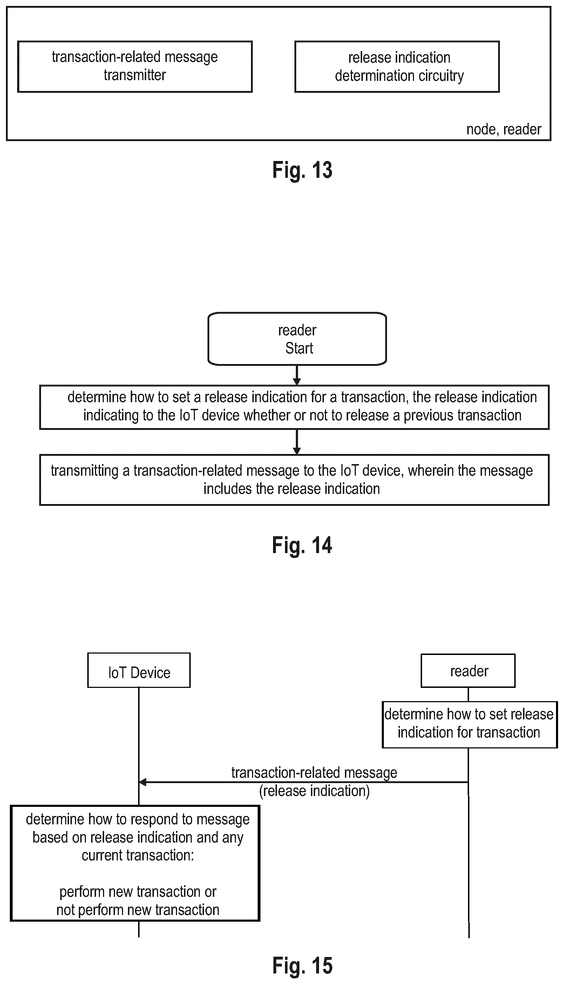

The improved loT transaction procedure further provides an improved reader. **Fig. 13** illustrates a simplified and exemplary reader structure according to an exemplary implementation of the improved loT transaction procedure, which can be implemented based on the general device structure explained in connection with Fig. 10. The various structural elements of the reader illustrated in said Fig. 13 can be interconnected between one another e.g., with corresponding input/output nodes (not shown) e.g., in order to exchange control and user data and other signals. Although not shown for illustration purposes, the reader may include further structural elements.

As apparent therefrom, the reader comprises a transaction-related message transmitter, and a release indication determination circuitry.

The processing circuitry of the general network device structure of Fig. 10 can be implemented as the above release indication determination circuitry of Fig. 13, and can also perform further functions as will be become apparent from below. The transceiver of Fig. 10 can function as the above transaction-related message transmitter of Fig. 13, and can also perform further functions as will become apparent from below.

One exemplary procedure is implemented by a reader that includes the following. Circuitry of the reader determines how to set a release indication for a transaction. The release indication indicates to an Internet of Things, loT, device whether or not to release a previous transaction (e.g., a transaction that is still ongoing or already completed successfully) performed by the loT device with the reader (e.g., releasing resulting in canceling the previous transaction, such that it is no longer ongoing at loT device). A transceiver of the reader then transmits a transaction-related message (e.g., a paging message or RAR) to the loT device, wherein the message includes the release indication. A corresponding exemplary method comprises the following steps performed by a reader:
determining how to set a release indication for a transaction, the release indication indicating to an Internet of Things, loT, device whether or not to release a previous transaction performed by the loT device with the reader, and
transmitting a transaction-related message to the loT device, wherein the message includes the release indication.

For instance, the reader and particularly the release indication thus assist the loT device in determining how the loT device responds to the message (e.g., performing a new transaction and canceling any ongoing transaction if any, or not performing a new transaction), based on the release indication (e.g., whether indication is True or False) and based on a transaction currently performed by the loT device (e.g., whether still ongoing or already completed).

A corresponding sequence diagram for an exemplary reader behaviour in line with the above-discussed reader and reader method is presented in **Fig. 14****.**

The above-described improved loT transaction procedure at the reader side facilitates achieving the objective and overcoming at least some of the drawbacks explained above, in the same manner as already explained above for the loT device.

**Fig. 15** is a signaling diagram of an exemplary and simplified implementation of the improved loT transaction procedure, illustrating the exchange of messages between the different participating entities (here the loT device, e.g. as an example of the communication device) and the reader (example of the network device) and the steps performed at these entities. The loT device behaviour and reader behaviour follow the above-described loT device and reader and the respective methods.

In the solution presented in Fig. 15, the reader is responsible for determining how to set the release indication (e.g., True or False) and to transmit the transaction-related message (e.g., a paging message) to the loT device. The loT device, in response to receiving said message and the release indication, determines how to respond to said message, e.g., determining whether to perform a new transaction (related to said message) or to not perform a new transaction (e.g., continuing with a currently-ongoing transaction).

In one example implementation for the reader behaviour, determining how to set the release indication by the circuitry can be based on one or more of various pieces of information as will be presented below.

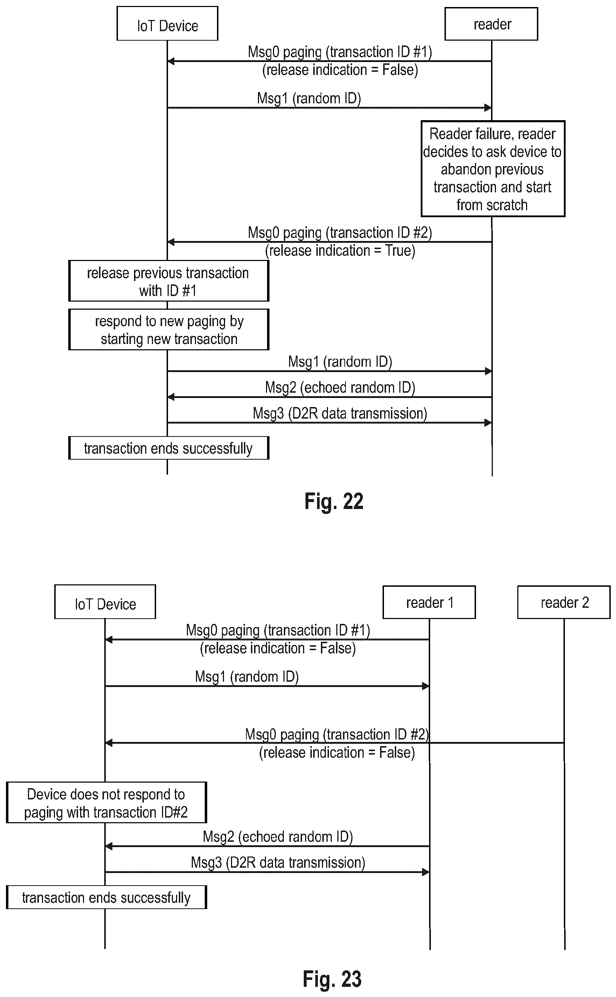

According to one example, the reader may take into account a priority of the transaction relating to the transaction-related message with the release indication. For example, the priority of a transaction (or service request from CN) may be high; the priority may at least be higher than the priority of previous transaction that may be still ongoing at the loT device. In order to prioritize the high-priority transaction, the corresponding release indication to be included in the paging message for triggering said high-priority transaction might be set to True. Conversely, for a low-priority transaction, the reader might decide to set the release indication to False, so as to avoid any release of a possibly high-priority transaction being currently performed at the loT device side. An example of considering the priority of a transaction is briefly presented in connection with Fig. 23.

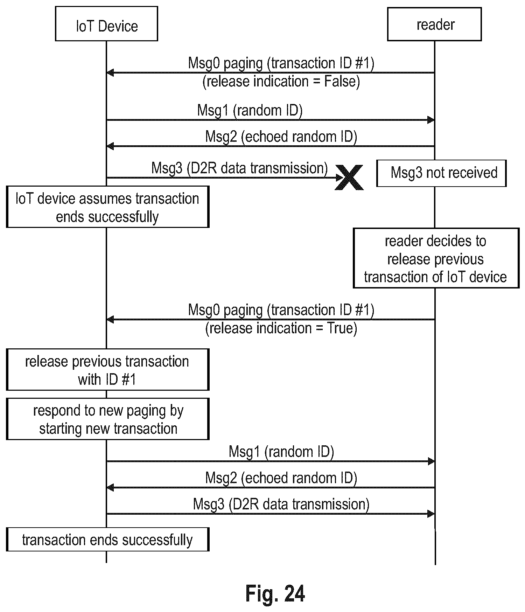

According to another example, the reader may take into account a completion status of the previous transaction for at least one of the loT device and other loT devices. For example, the completion status can be completed successfully or not completed successfully. In one example implementation, the reader may decide to set the release indication to True, in case the completion status of a previous transaction is not successfully completed (from the reader perspective). In said case, the reader may be able to control the loT device to respond to the new paging, even in a failure case where the loT device wrongly assumes that the previous transaction was successfully completed (see e.g. Fig. 24) or where the loT device is erroneously in a deadlock situation.

In another example implementation, the reader may decide to set the release indication to False, in case the completion status of a previous transaction is successfully completed (from reader perspective) for at least one or more loT devices among a plurality.

According to still another example, the reader may take into account the intention to avoid duplicate responses from loT devices that have already successfully completed the previous transaction. In order to facilitate avoiding duplicate responses, the reader may decide to set the release indication to False so as to avoid that an loT device releases any previous transaction that is ongoing or already completed. In case that avoiding of duplicate responses is less relevant in the system, the reader may rather set the release indication to True, so as to facilitate that all loT devices respond to the paging (including those that may have already completed the previous transaction successfully).

According to still another example, the reader may take into account whether or not the loT device is within coverage of multiple readers. In multi-reader scenarios the reader is aware that the loT device may receive paging message from multiple readers. In order to avoid a ping-pong of starting of transactions and releasing of ongoing transactions, the reader might rather set the release indication to False. One example implementation of such a consideration is presented in connection with Fig. 23.

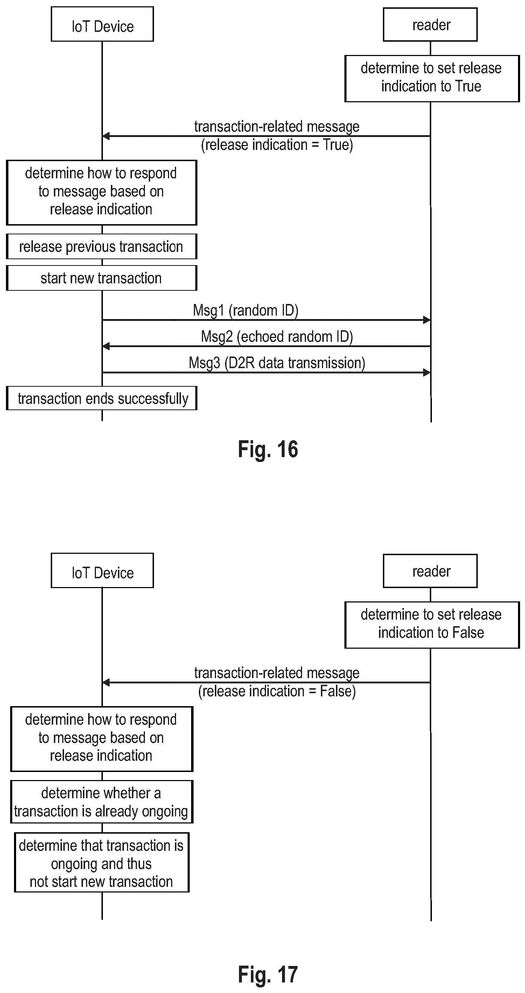

More detailed examples of signaling diagrams of exemplary and simplified implementations of the improved loT transaction procedure are now presented in Fig. 16 and 17.

In the implementation of **Fig. 16****,** it is exemplarily assumed that the release indication is set to True by the reader, in other words that the release indication indicates to release the previous transaction. The reader might have set the release indication to True for different reasons, for instance, because the new transaction to be performed by the loT device is of a high priority and should not be ignored by the loT device (the loT device might ignore a new paging because it has reached already the maximum number of parallel ongoing transactions).

In accordance with the release indication, the loT device releases a previous transaction (e.g., an ongoing transaction or optionally an already-completed transaction). As a result of the release, any previous transaction is no longer pending at the loT device, which thus can start a new transaction in line with the transaction-related message (e.g., a paging message triggering the transaction) while complying with the parallel transaction limitation. As apparent from the exemplary implementation of Fig. 16, the started transaction involves the Msg1 and Msg2 of a random access procedure (for one example implementation, see Fig. 8) as well as the Msg3 (D2R data transmission) for inventory purposes. After transmission of the Msg3 for inventory, the loT device considers the transaction to have ended successfully. Consequently, the loT device is able to comply with the parallel-transaction limitation of only one concurrent transaction at a time, while the reader is in control that the loT device releases a previous transaction (if any).

Another example implementation is presented in **Fig. 17****,** in which it is assumed that the release indication is set to False, in other words that the release indication indicates to not release the previous transaction. The reader might have set the release indication to False, for instance, because the reader wants to trigger a new transaction but at the same time wants to avoid a ping-pong between different transactions at the loT devices, e.g., in a multi-reader scenario.

In the example implementation of Fig. 17, the loT device is exemplarily assumed to already be performing an ongoing transaction, thereby having reached the maximum transaction limitation of 1. Correspondingly, the loT device decides to not start a new transaction in line with the transaction-related message.

Although not illustrated in Fig. 17, in case the loT device determines that no ongoing transaction is being performed, the loT device may start a new transaction in line with the transaction-related message. For example, the new transaction may be performed in a same (e.g., inventory only and contention-based random access) or different manner (e.g., inventory and command, see Fig. 8, e.g., without random access) than presented in connection with the above Fig. 16.

As explained herein, according to the improved loT transaction procedure, a release indication is newly introduced, wherein the release indication can indicate to release a previous transaction or to not release a previous transaction. In one example implementation, the release indication could be set to True to encode the instruction of releasing the previous transaction and could be set to False to encode the instruction of not releasing (e.g., keeping) the previous transaction.

Alternatively, the indication could instead be implemented as a non-release indication (or instead termed hold indication or keep indication and other synonyms). Correspondingly, the non-release indication could be set to True to encode the instruction of not releasing (e.g., keeping) the previous transaction and could be set to False to encode the instruction of releasing the previous transaction.

In the following description, for sake of explanation only, the new indication will be primarily used as a release indication.

Irrespective of whether implementing the new indication as a release or non-release indication, according to the improved loT transaction procedure, the indication can be implemented in several different ways.

According to a first exemplary implementation of the release indication, the release indication is included in a separate release field of the message. Correspondingly, the release field of the message (e.g., paging message) is dedicated to indicate release or non-release of a previous transaction. In one variant thereof, one value of said release indication indicates to release the previous transaction (e.g., bit 1 = True) and another value of the release indication indicates to not release the previous transaction (e.g., bit 0 = False). This implementation of the release indication represents a stateless coding, which has the benefit of being independent of a previous "state" of the release indication, e.g., the release indication can be properly decoded by the loT device even without knowing a previous value of the release indication (compared to next variant).

In another variant thereof, a state-coded coding is used according to which the release indication indicates to release the previous transaction when a value of the release indication is changed compared to the value of a previous release indication (e.g., another release indication of a previous message). Conversely, the release indication indicates to not release the previous transaction when a value of the release indication is not changed compared to the value of the previous release indication (i.e., it stays the same). For instance, when in a first paging message the release indication was set to 0 and in the subsequent paging message the release indication is set to 1, then, the changed value indicates the release of the previous transaction (relating to the first paging). This applies correspondingly for a change of the release indication from 1 to 0. On the other hand, in case the two subsequent release indications received at the loT device have the same value, the release indication is determined to indicate to not release the previous transaction (relating to the first paging). Using the state-coded coding of such an implementation can have the advantage of further narrowing down the applicable devices by the release indication. For example, assuming both loT devices A and B have stored the state of release indication as 0. Now the reader wants to trigger a new service request by a first paging message with the release indication set to 1 targeting both loT devices A and B. However, only loT device A receives the paging but loT device B misses the paging. As a result, loT device A starts the transaction and updates the stored state of release indication as 1. Assume that loT device A successfully completes the transaction. Now the reader triggers a second paging with the same service request to allow any missing loT devices in the first round to respond. In the second paging, the reader can set the release indication as 1 (i.e., the same as in the first paging). Both loT devices have received the second paging this time. However, from loT device A perspective, the state of release indication is not changed from first paging to second paging ("1" → "1"), so IoT device A can avoid sending duplicated response to the second paging. On the other hand, loT device B should respond to the second paging because the release indication is indicated as True ("0"→"1").

The above-explained dedicated release field may have a length of 1 or more bits.

According to a second exemplary implementation, the release indication is part of a transaction ID field in the message. Correspondingly, rather than providing a dedicated field for the release indication, an already existing field is re-used and possibly extended to carry the release indication. In one example, the release indication can be located at the beginning or at the end of the transaction ID field. In either case, however, the loT device can decode the release indication from the transaction ID field.

According to a third exemplary implementation, the release indication is implemented as the transaction ID of the message. In more detail, the transaction ID itself is used by the reader to encode the release indication. In one exemplary variant, the transaction ID is used as a state-coded codepoint, such that the release indication (transaction ID) indicates to release the previous transaction when a value of the release indication (transaction ID) is changed compared to the value of the previous release indication (transaction ID). Conversely, the release indication (transaction ID) indicates to not release the previous transaction when a value of the release indication (transaction ID) is not changed compared to the value of the previous release indication (transaction ID).

In another exemplary variant of the third implementation, a stateless-coding within the transaction ID can be provided, by having separate sets of transaction IDs, one set being associated with the instruction of releasing the previous transaction, and another set of being associated with the instruction of not releasing the previous transaction. Alternatively or additionally, one set of transaction IDs can be associated with one reader, and another set of transaction IDs can be associated with another reader. With such arrangements, loT devices can be instructed to release or not release based on whether the transaction is initiated from the same reader or a different reader.

As explained herein, according to the improved loT transaction procedure, the release indication can be included in a transaction-related message transmitted from the reader to the loT device. There are several options on how this transaction-related message can be implemented.

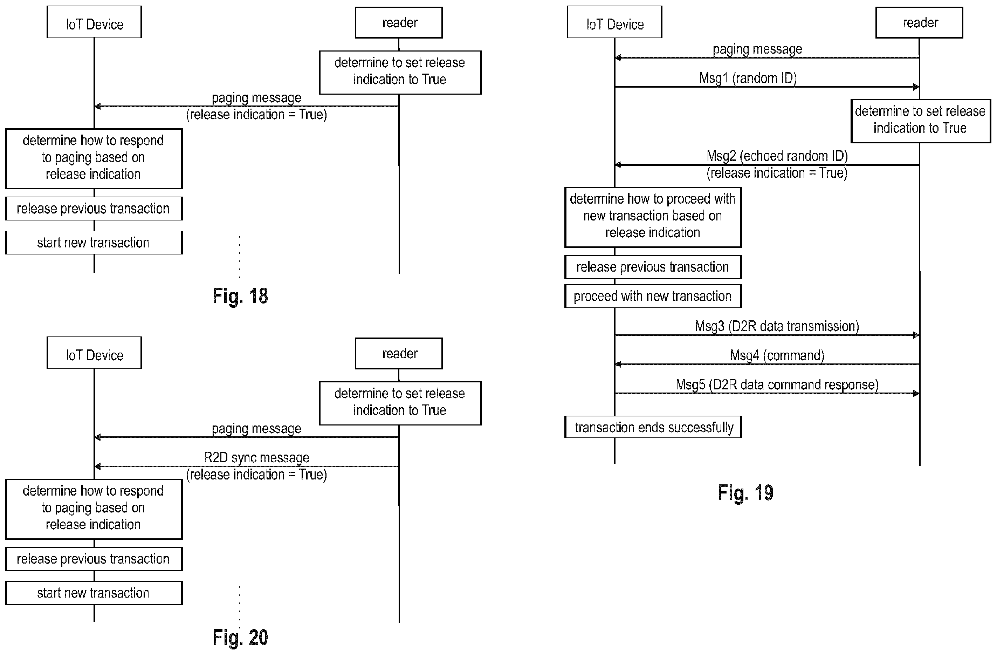

According to a first exemplary implementation of the transaction-related message, the message including the release indication is a paging message for triggering a transaction between the loT device and the reader. **Fig. 18** illustrates an exemplary signaling exchange, in which the paging message is transmitted from the reader to the loT device and includes at least the release indication. It is exemplarily assumed that the release indication is set to True by the reader. In accordance with the release indication, the loT device releases a previous transaction (if any), which is thus no longer pending at the loT device. The loT device thus can perform a new transaction. The steps of the newly-started transaction are omitted from Fig. 18, but could be performed in a same (e.g., inventory only and contention-based random access) or different manner (e.g., inventory and command, see Fig. 8, e.g., without random access) than presented in connection with the above Fig. 16.

According to a second exemplary implementation of the transaction-related message, the message including the release indication is a random access response (RAR) message that is received from the reader. This RAR message (e.g., Msg2 of Fig. 9) is transmitted by the reader in response to a first random access message (e.g., Msg1 of Fig. 9) transmitted from the loT device to the reader. The random access is part of a transaction triggered by a previous paging message received at the loT device. **Fig. 19** illustrates an exemplary signaling exchange according to this second exemplary implementation. As apparent therefrom, the reader triggers a new transaction by transmitting a paging message to the loT device, which responds by transmitting Msg1 of the random access procedure to the reader (here exemplary assuming a contention-based random access).

At the latest at this point of time (illustrated in Fig. 19; but could also be performed earlier), the reader determines how to set the release indication and in this example determines to set it to True. The reader also creates the RAR message including the random ID received from said loT device in Msg1 (to thereby resolve any contention in favour of said loT device). The Msg2, including the echoed random ID, is transmitted to the loT device, to indicate the release indication set to True.

In another scenario, the reader creates the RAR message including the random ID received from a different loT device (not the loT device that has sent Msg1 in Fig. 19). In other words, the random ID received by the loT device in Fig.19 is different than the one sent in Msg1 in Fig.19. In this case, by indicating the release indication as True, the reader would like to explicitly inform that the loT device in Fig.19 abort the procedure.

In accordance with the release indication being True, the loT device releases a previous transaction (if any), such that a transaction is no longer performed at the loT device, which thus can continue further with performing the new transaction. In the present example of Fig. 19, the transaction is further performed by the loT device and involves an inventory (Msg3 D2R data transmission) as well as a further command procedure (see Msg4 Command and Msg5 D2R data command response).

In an example different from the one explained in connection with Fig. 19, the reader may determine to set the release indication to False and transmits such a release indication to the loT device in Msg2. In case the loT device is currently performing a transaction, this ongoing transaction is not released in accordance with the received release indication set to False. Consequently, if the loT device needs to comply with the transaction limitation, the loT device may decide to abort the just-started new transaction, in response to the Msg2 reception and determine to rather proceed further with the previous already-ongoing transaction.

As apparent from the present implementation, the loT device may thus be able to start a new transaction (e.g., transmit Msg1 to reader) even despite having reached the maximum transaction limitation (e.g., an ongoing transaction is already performed by the loT device). It should be noted, however, that it may later be necessary to abort said new transaction. In this sense, the loT device although starting a new transaction does not perform that new transaction in full because it is aborted. Consequently, the loT device may still comply with the maximum transaction limitation, because the loT device does not perform the transaction in the sense that the transaction is not completed but may be aborted before it is completed. The loT may thus not perform the new transaction when an ongoing transaction is already being performed by the loT device.

According to a third exemplary implementation of the transaction-related message, the message indicating the release indication is a reader-to-device (R2D) message received from the reader after having received the paging message. For example, the R2D message can be a message currently discussed at 3GPP, which is to be transmitted by the reader to the loT device shortly after a paging message and which is intended to facilitate that the loT device(s) to determine Msg1 resources (e.g. access occasions). Such R2D message may indicate the start of a set of Msg1 resources that were configured in the paging message before. Such R2D message can be named as trigger message, access occasion trigger message, R2D trigger message, or R2D sync message. Exemplarily assuming a contention-based random access, the mentioned R2D message may also be used to select the time and frequency resources for transmitting the first random access message of the triggered transaction.

**Fig. 20** illustrates an exemplary signaling exchange, according to this third exemplary implementation, including the R2D sync message carrying the release indication. In this example, the reader decided to set the release indication to True and transmits the R2D sync message to the loT device carrying such a release indication. The remaining steps of Fig. 20 are exemplarily the same as explained above already in connection with Fig. 18 and their detailed explanation is thus omitted here.

Correspondingly, according to these exemplary implementations of the improved loT transaction procedure, no new release message needs to be defined, because another already-existing message is reused to carry the release indication.

As explained herein, the improved loT transaction procedure may include the step process of the loT device determining how to process the previous transaction based on the release indication of the received message, including releasing the previous transaction in case the release indication indicates this (e.g., set to True) or not releasing the previous transaction in case the release indication indicates this (e.g., set to False).

This process of releasing a transaction can distinguish between the case in which there is an ongoing transaction being performed currently by the loT device and the converse case in which there is no ongoing transaction being performed currently by the loT device (but there may be a previous transaction that is already completed successfully by the loT device).

With regard to a release indication which indicates to not release a previous transaction, there is no need to distinguish between a currently-ongoing transaction and a previous transaction that is already completed successfully. In either case, the loT device does not release any transaction, be it ongoing or completed, and then proceeds to determine whether to perform the next transaction or not.

In case there is an ongoing transaction currently performed by the loT device, the loT device may release said currently ongoing transaction, which results in that the transaction is no longer ongoing at the loT device. In one example, said released transaction can be considered as having been completed as a failure or simply canceled.

In case no transaction is currently performed by the loT device, there are at least the following two possibilities on how the loT device may behave in response to a release indication that indicates releasing a previous transaction. According to a first option, the loT device may ignore the release indication, meaning for instance that no previous transaction is released, because no transaction is currently ongoing. As such, the instruction by the release indication would be directed at any ongoing transactions, but not at a previous, already successfully completed, transaction.

According to a second option, the loT device may apply the release indication to the previous, already successfully completed, transaction, and may consider same to be a failure. For instance, the status of such an already successfully completed transaction is set to failure (e.g., changing the status from success to failure) in response to the release indication set to True. Or in another example, the status and/or any stored information (e.g. transaction ID) that are related to an already completed transaction are cleared from the loT device's memory. In this case, even if a new paging message is directed to the same transaction ID as the previous completed and successful transaction, the loT device still responds to the paging by performing a new transaction regarding said same transaction ID in view of the changed failure status (or in the absence of a stored status). This may result in the disadvantage of triggering duplicate transactions at the loT device (with duplicate D2R and R2D transmissions). However, such an loT behaviour has the advantage of allowing to reduce the complexity of the loT device, because the logic of setting the previous transaction as a failure follows a similar logic as the processing of a NACK message received from the reader.

The above reflects thus a further exemplary and optional check performed at the loT device, particularly the step of determining to not perform another transaction in case the transaction ID of the message is the same as a transaction ID of a transaction previously performed and completed successfully. This check becomes particularly relevant when the loT device completed a previous transaction successfully and another paging is received by the loT device for triggering a same transaction as the successfully completed one (e.g., with the same transaction ID as already stored by the loT device for the successfully completed transaction). From the reader perspective, the reader may decide to trigger re-access for other loT devices, which had not yet successfully completed the previous transaction.

Moreover, the reader may determine how to set the transaction ID for the paging messages. The reader may take into account that the loT device does not start a new transaction in case the transaction ID of the paging message is the same as a transaction ID of a transaction previously completed successfully.

As explained herein, the improved loT transaction procedure may include the step at the loT device of determining whether a transaction is currently performed. In one example, a transaction is considered to be currently performed by the loT device, in case a random access of the transaction has not been completed. For instance, the loT device might not have yet transmitted the random access attempt to the reader (e.g., Msg1 of Fig. 9) or the random access response (e.g., Msg2 of Fig. 9) has not yet been received at the loT device, such that a potential contention has not been resolved in favour of the loT device.

In another example, a transaction is considered to be currently performed, in case the loT device has not yet performed a data transmission of the transaction to the reader (e.g., Msg3 D2R data transmission of Fig. 19, or Msg5 D2R data command response of Fig. 19, or any further D2R data transmission during a transaction). The data carried by the D2R data transmission may be considered to be the purpose of the triggered transaction, such that the D2R data transmission could be considered as completing the transaction.

Further, in line with the above, a transaction is considered to not be currently performed, after the loT device performs such a data transmission (e.g., Msg3 of Fig. 8, or command response of C2 of Fig. 8, or any further subsequent D2R transmission of the transaction to the reader (e.g., transactions comprises more than one command part with subsequent command responses to subsequent commands not illustrated in Fig. 8).In the example of an inventory and command type of transaction, the first D2R data transmission completes the inventory (e.g., Msg3 of Fig. 8), and in one exemplary variant, the loT device could consider the transaction to be completed. If subsequently a command message is received from the reader, the loT device may redefine the transaction as still ongoing, until the second D2R data transmission is transmitted (e.g., D2R data command response of Fig. 8).

In another exemplary variant, however, the loT device might be already aware that the type of transaction also involves a command part as well. In such a case, upon transmitting the first D2R data transmission (thereby completing the inventory part of the transaction), the loT device considers the transaction to still be ongoing, while considering the transaction to be completed (e.g., not ongoing) after having transmitted the second D2R transmission (e.g., the D2R data command response) completing the command part of the transaction and thus completing the transaction itself).

It should be noted that the above explained determination of how the loT device determines whether a transaction is currently performed applies to transactions with a contention-based (CBRA) random access and to transactions with a contention-free (CFRA) access. In particular, the above noted D2R Msg3 is Msg1 of a CFRA transaction, and the above command responses are equally command responses in CFRA.

As explained herein, the improved loT transaction procedure may include the step at the loT device of determining whether or not to start a new transaction (or phrased differently, whether or not to perform a new transaction). In one exemplary implementation, in case it was determined that a transaction is currently performed by the loT device, the loT device does not perform another transaction. Alternatively, the loT device determines to perform another transaction, in case it was determined that no transaction is currently performed by the loT device.

In one example, these processes can be considered to result from the requirement of the loT device to comply with the transaction limitation introduced by 3GPP that the loT device may only perform one (or more depending on the maximum) transactions at a time. The above processes assume exemplarily that the transaction limitation is 1 transaction at a time. However, the above processes apply corresponding to other transaction limitations of 2, 3, 4, 5 etc. transactions at a time.

The above process of determining whether a transaction is currently performed by the loT device can be performed after processing the release indication at the loT device and not before processing the release indication. In particular, the intention of the new release indication is that the loT device, in response to a release indication indicating to release a previous transaction, releases a transaction such that it is no longer ongoing. This could be taken into account before determining whether a transaction is currently performed.

As a further exemplary variant of the above, even in case it was determined that no transaction is currently performed by the loT device, the loT device may not always start (or perform) a new transaction in response to the received (paging) message. For instance, the loT device may perform a further process to avoid duplicate transactions. In particular, if a transaction was successfully completed by the loT device, the loT device could decide to not perform the same transaction again, thereby avoiding duplication of the same transaction. In one example, transaction IDs, included in the message triggering a transaction, may be used to track different transactions. If a transaction with a transaction ID was successfully completed by the loT device, the loT device could decide to not perform another transaction for the same transaction ID (in a further example, the transaction IDs as specifically explained in the above section "Initial access and re-access for loT devices" could be used to track different transactions and to facilitate avoiding duplicate transactions).

As explained herein, the improved loT transaction procedure may transmit a release indication to the loT device, carried with a transaction-related message such as a paging message, a RAR message or other R2D message. According to further exemplary implementations, said message carrying the release indication further identifies the intended targets of the release indication, wherein the identification can be achieved in different manners.

According to a first exemplary variant, an ID of one or more loT devices is included in the message. For instance, said loT device ID could be an access stratum, AS, ID or a random ID randomly selected by the loT device (as part of the random access procedure).

According to a second exemplary variant, one or more group IDs, respectively identifying a group of loT devices, could be included in the message. Thus, rather than identifying each loT device individually (e.g., by including several loT device IDs in the message), a group ID would collectively identify a plurality of IoT devices that are associated with said indicated group ID.

According to a third exemplary variant, using specific time and/or frequency resources for carrying the release indication may allow to identify one or more loT devices. For instance, one or more loT devices may be configured to monitor these specific time and/or frequency radio resources for receiving the message with the release indication. Other loT devices may be configured to monitor radio resources at different times and/or frequencies. Correspondingly, a reader can address the release indication to only specific one or more loT devices, by transmitting the message, carrying said release indication, in those time and/or frequency radio resources that have been specifically configured for the intended loT device(s).

According to a fourth exemplary variant, a 1-bit flag may be included in the message, carrying the release indication. The 1-bit flag, e.g., set to 1, may identify all loT devices. Thus, any loT device receiving said message with the release indication and the 1-bit flag (e.g., set to 1) is the intended recipient.

According to a fifth exemplary variant, in case no dedicated IoT identifier is included in the message, all loT devices receiving the message are the intended targets.

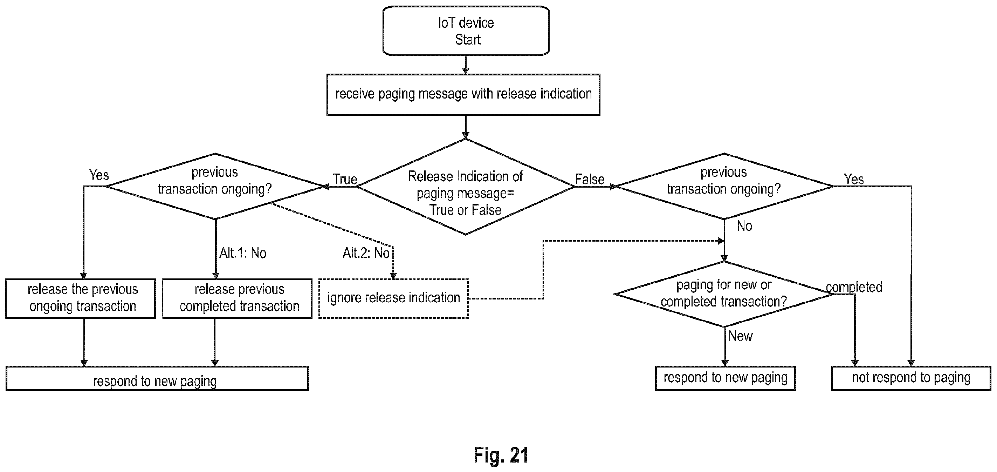

The improved loT transaction procedure has been explained herein as involving specific loT device behaviour on how to process the new release indication and a transaction trigger (e.g., paging message). **Fig. 21** illustrates a sequence diagram for a detailed exemplary implementation of said improved loT transaction procedure.

Accordingly, the loT device receives the release indication from the reader, in this example in a paging message, which is intended to trigger a new transaction in the loT device.

In a first determination, the loT device determines whether the release indication indicates to release a previous transaction (e.g., release indication set to True) or to not release a previous transaction (e.g., release indication set to False).

In either the release or non-release case, the loT device determines, in a second determination, whether a previous transaction is currently ongoing.

If the release indication indicates to not release the previous transaction (see False) and a transaction is currently ongoing, the loT device does not respond to the paging and thus does not perform a new transaction in response to the paging.

On the other hand, if the release indication indicates to not release the previous transaction (see False) and no transaction is currently ongoing, the loT device proceeds to perform a third determination as to whether the paging is intended for a new transaction (e.g., for a new transaction ID) or for an already successfully completed transaction (e.g., transaction ID of new paging is same as a transaction ID stored for an already successfully completed transaction). In case the new paging is for an already successfully completed transaction, the loT device does not respond to the paging and thus does not perform another transaction in response to the paging. In case the new paging is for a new transaction, the loT responds to the new paging and correspondingly starts and performs the new transaction in response to the paging.

If the release indication indicates to release the previous transaction (see True) and a transaction is currently ongoing, the loT device releases the ongoing transaction, such that no transaction is ongoing any longer. The loT responds to the new paging and correspondingly starts and performs the new transaction in response to the paging. Moreover, even if the loT device determines that no transaction is currently ongoing, according to a first alternative (Alt. 1: No in Fig. 21), the loT device may proceed to release a transaction that was already successfully completed by the loT device, which can involve that the transaction is stored as a failure (or simply canceled and deleted, e.g., the transaction ID of said failed transaction is deleted). In view of that, a further determination as to whether the paging is intended for a new transaction or for an already successfully completed transaction (e.g., see explanation above regarding third determination) is not necessary, because the previously completed transaction was released. Furthermore, the loT responds to the new paging and correspondingly starts and performs the new transaction in response to the paging. According to the first alternative presented therein, in case the release indication indicates to release a previous transaction, the improved loT transaction procedure results in that the loT device performs a new transaction, regardless of whether a transaction is ongoing or not.

According to another second alternative (Alt. 2: No in Fig. 21), instead of releasing the previously completed transaction, the loT device may ignore the release indication (e.g., no transaction is released at all). As a result, there is the possibility that the paging message is directed at a same transaction already performed and completed successfully by the loT device. Therefore, the loT device may proceed to perform the third determination (e.g., see explanation above regarding third determination) as to whether the paging is intended for a new transaction or for an already successfully completed transaction and may proceed accordingly as explained above. Thus, the loT device performs a further transaction if the paging is for a new transaction, and the loT device does not perform a transaction in response to the received paging message, in case the paging is directed to a previous transaction that was already completed successfully.

In the above implementation of Fig. 21, the order of the first, second and third determinations is as presented in figure. However, the order of the determinations is not essential, but rather the respective results of the first, second, and third determinations are to be considered in combination to then define the resulting loT device behaviour of whether to respond or not respond to the paging. The order of performing the three determinations by the loT device can be in parallel or different than illustrated in Fig. 21. For instance, the loT device can first determine whether there is an ongoing transaction and then determine whether the release indication is True or False.

**Fig. 22** is a signaling diagram of messages exchanged between an loT device and a reader, which follow one exemplary implementation of the improved loT transaction procedure described herein. In particular, the reader initiates a transaction (e.g., based on a service request from the core network), which is identified by "transaction ID#1". The reader sends a paging message with the transaction ID#1 to a group of target loT devices (e.g., based on a group ID). In this paging message, the release indication is set to False, such that any previous transaction (be it currently ongoing or successfully completed) is not released.

Based on the paging message, each target loT device starts the triggered transaction and may determine the access occasions and resources for sending Msg1, and then may respond with Msg1 (including a random ID).

However, the reader is assumed to suddenly go through a failure. After the reader is back to operation, it cannot remember which loT devices have responded and which have not. Therefore, the reader may decide to ask the target loT devices to abandon any previous transaction by sending the release indication being set to True. The reader correspondingly initiates a paging with a new transaction ID#2 with release indication being set to True, thereby facilitating that all loT devices respond to the new paging.

Alternatively, the reader may use the same transaction ID#1 as before to trigger a re-access of all targeted loT devices. This is possible for instance in case the loT device behaviour involves that also any successfully completed transaction is released by the release indication.

The target loT devices release (e.g., conclude as failure) the ongoing transaction (or a successfully completed transaction) starting with the previous paging. The loT devices may start a new transaction according to latest paging, including the transmission of the Msg1, Msg2 and Msg3 as illustrated. After sending Msg3, the loT device may assume that the transaction ends successfully.

**Fig. 23** is a signaling diagram of messages exchanged between an IoT device and a reader, which follow another exemplary implementation of the improved loT transaction procedure described herein. A multi-reader scenario is assumed with at least two reader 1 and reader 2. Both reader respectively initiate a transaction by transmitting a paging message to the loT device, as already described similarly for Fig. 22. The two transactions are identified by different transactions IDs, wherein the transaction triggered by reader 1 relates to transaction ID#1 and the transaction triggered by reader 2 relates to transaction ID#2. In both pagings, the release indication is set to False by the reader, such that any previous transaction (be it currently ongoing or successfully completed) is not released.

The loT device first receives paging message from reader 1 and responds thereto with Msg1 (including a random ID). Correspondingly, the transaction of ID#1 is ongoing at the point of time the loT device receives the other paging message or transaction ID#2 from reader 2. Since the loT device has already an ongoing transaction with reader 1 and because the release indication from reader 2 is set to False, the loT device does not release but proceeds with transaction of ID#1 and does not perform another transaction with reader 2.

This prevents the ongoing procedure with one reader from being interrupted by another reader. Thus, ping-pong between different services and/or between different readers can be avoided.

As another example, if the A-loT paging with transaction ID#2 from reader 2 sets the release indication as True (not shown in Fig.23), the loT device will abandon the ongoing procedure with reader 1 and responds to reader 2. This provides a way for a high priority service request to interrupt an ongoing procedure.

**Fig. 24** is a signaling diagram of messages exchanged between an loT device and a reader, which follow another exemplary implementation of the improved loT transaction procedure described herein. In this example scenario, the Msg3 transmitted by the loT device to the reader is not received at the reader, and the loT device may thus enter a deadlock.

In particular, as explained above already for Fig. 22, the reader initiates a transaction, which is identified by "transaction ID#1". The reader sends a paging message with the transaction ID#1 to a group of target loT devices. In this paging message, the release indication is set to False, such that any previous transaction (be it currently ongoing or successfully completed) is not released.

Based on the paging message, each target loT device starts the triggered transaction and may determine the access occasions and resources for sending Msg1, and then may respond with Msg1 (including a random ID). The reader also performs the random access procedure and responds with a Msg2 (echoing the random ID received from the loT device in Msg1). The loT device proceeds by transmitting the D2R data transmission of Msg3, which however is not received at the reader (e.g., due to bad channel conditions).

The loT device wrongly assumes that the ongoing transaction of ID#1 is successfully completed after having transmitted the D2R data transmission to the reader. Moreover, even if in one example implementation the reader transmits a NACK to the loT device to inform on the missed Msg3, said NACK may also get lost due to the bad channel conditions.

Consequently, the loT device may not be able to successfully complete the transaction of ID#1, even if the reader transmits another paging for transaction ID#1, because the loT device wrongly assumes that said transaction of ID#1 was already successfully completed.

The reader may thus decide to release any previous transaction of ID#1, be it still ongoing at the loT device or already completed (presumably successfully as in Fig. 24). To said end, the reader may decide to ask the target loT devices to abandon any previous transaction by sending the release indication being set to True and using the same transaction ID#1 as before.

The target loT device releases (e.g., conclude as failure) the completed transaction of ID#1 and performs the transaction of ID#1 in response to the latest paging, including the transmission of the Msg1, Msg2 and Msg3 as illustrated. After sending Msg3, the loT device again may assume that the transaction ends successfully, in this case however, the Msg3 was indeed successfully received by the reader.

In the example signaling exchange of Fig. 24, the same transaction ID#1 is used by the reader in the second paging message. Alternatively, however, the reader may also use a different transaction ID#2 instead.

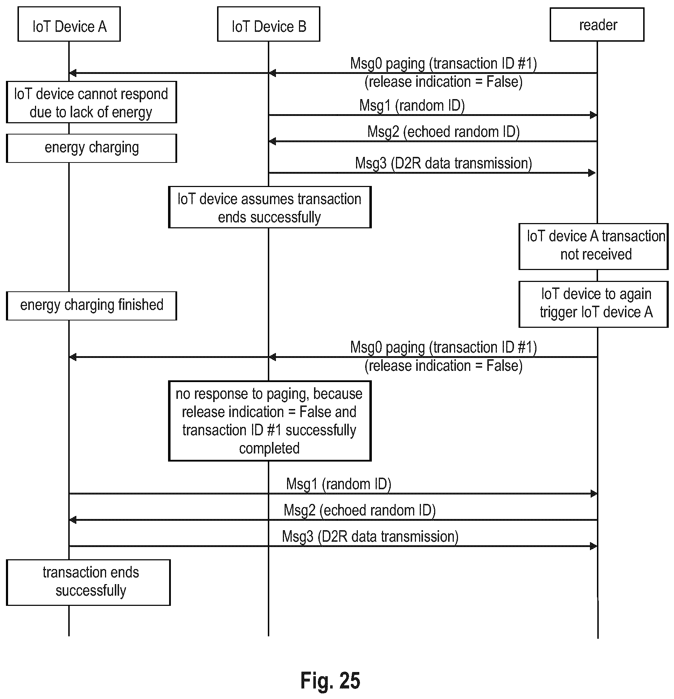

**Fig. 25** is a signaling diagram of messages exchanged between an loT device and a reader, which follow another exemplary implementation of the improved loT transaction procedure described herein. In this example scenario, the behaviour of the reader and two loT devices A and B is explained, wherein loT device A is not able to initiate a transaction, e.g., here due to a lack of energy.

In particular, as explained above already for Fig. 22, the reader initiates a transaction, which is identified by "transaction ID#1, wherein the paging message is received at least by loT devices A and B. In this paging message, the release indication is set to False, such that any previous transaction (be it currently ongoing or successfully completed) is not released.

IoT device B receives the paging and performs the transaction (e.g., inventory only as illustrated in Fig. 25) with the reader without any problems. IoT device B considers that the transaction of ID#1 is successfully completed after having transmitted the D2R data transmission to the reader.

On the other hand, loT device A is not able to perform the transaction of ID#1 triggered by the paging, due to a lack of energy. The loT device instead needs to charge energy and will not be able to respond.

The reader may not know for sure whether all the target loT devices have been inventoried and therefore decides to trigger again the transaction. In some other cases, the reader may be able to notice that the transaction with loT device A was not properly performed and decides to again trigger the transaction. The release indication is set to False by the reader, such that any previous transaction (be it currently ongoing or successfully completed) is not released. Thus, loT device B does not release the previous transaction and does not respond to the latest paging for ID#1. A duplicate response by loT device B for the transaction of ID#1 is thus avoided.

However, loT device A in the meantime has finished the energy charging and now is able to receive the paging and perform the transaction (e.g., inventory only as illustrated in Fig. 25) with the reader without any problems. IoT device A considers that the transaction of ID#1 is successfully completed after having transmitted the D2R data transmission to the reader.

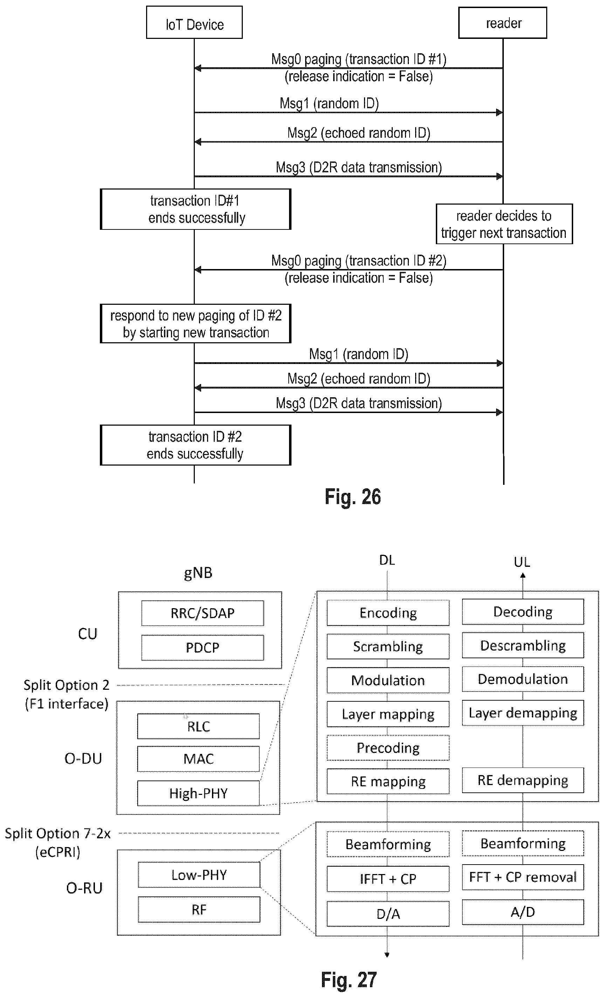

**Fig. 26** is a signaling diagram of messages exchanged between an loT device and a reader, which follow another exemplary implementation of the improved loT transaction procedure described herein. In the present scenario, two subsequent transactions with ID#1 and ID#2 are triggered by the reader for an IoT device.

In particular, as explained above already for Fig. 22, the reader initiates a transaction, which is identified by "transaction ID#1" and sends a paging message with the transaction ID#1. In this paging message, the release indication is set to False, such that any previous transaction (be it currently ongoing or successfully completed) is not released.

Based on the paging message, the loT device starts the triggered transaction of ID#1 and completes it successfully.

The reader may eventually decide to trigger the next transaction of ID#2 and sends another paging message with the transaction ID#2. Again, in this paging message, the release indication is set to False, such that any previous transaction (be it currently ongoing or successfully completed) is not released. Based on the latest paging message, the loT device performs the triggered transaction of ID#2 and completes it successfully. Since at the time of receiving the second paging for transaction ID#2 the loT device has no ongoing transaction, the loT device can perform the transaction of ID#2. Furthermore, even if the transaction of ID#1 was successfully completed, the reader can control that the loT device performs the transaction by indicating the next ID#2. Thus, the loT device will not miss responding to a new paging (and new service request from core network), after completing a previous transaction successfully.

### Further Implementation Details

### RRC connection setup and reconfiguration procedures

Interactions between a UE, gNB, and AMF (a 5GC entity) in the context of a transition of the UE from RRC_IDLE to RRC_CONNECTED for the NAS (Non-Access Stratum) part are described (see 3GPP TS 38.300).

RRC is a higher layer signaling (protocol) used for UE and gNB configuration. In particular, this transition involves that the AMF prepares the UE context data (including e.g., PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
- (1) Split Option 1:: between RRC (radio resource control) and PDCP
- (2) Split Option 2:: between PDCP and RLC (High-RLC)
- (3) Split Option 3:: between High-RLC and Low-RLC
- (4) Split Option 4:: between RLC (Low-RLC) and MAC (High-MAC)
- (5) Split Option 5:: between High-MAC and Low-MAC
- (6) Split Option 6:: between MAC (Low-MAC) and PHY (High-PHY)
- (7) Split Option 7:: between High-PHY and Low-PHY
- (8) Split Option 8:: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

**Fig. 27** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full Duplex operation may be applied to an operation in which the terminal is capable of performing sidelink transmission/reception simultaneously. Further, the Full Duplex operation may be applied to an operation in which the terminal is capable of performing sidelink transmission/reception and uplink or downlink transmission/reception simultaneously.

### Further Variants, including Hardware and Software Implementation of the present disclosure

In the following, variants of the present disclosure will be described.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient IoT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal.

The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient IoT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to an aspect 1, an Internet of Things, loT, device is provided, comprising the following. A transceiver of the loT device receives a transaction-related message from a reader. Said message includes a release indication that indicates whether or not to release a previous transaction performed by the loT device with the reader. Further, a circuitry of the loT device determines how to respond to the message, based on the release indication and based on a transaction currently performed by the loT device.

According to an aspect 2, relating to the loT device according to aspect 1, the message including the release indication is at least one of
- a paging message for triggering a transaction between the loT device and the reader,
- a random access response message that is received from the reader, transmitted in response to a first random access message transmitted from the loT device to the reader, and
- a reader-to-device message received from the reader after having received the paging message.

According to an aspect 3, relating to the loT device according to aspect 1 or 2, the circuitry determines how to process the previous transaction based on the release indication of the message. Optionally, in case the release indication indicates to release a previous transaction, the circuitry determines to release a transaction that is currently performed by the loT device.

According to an aspect 4, relating to the loT device according to aspect 3, in case the release indication indicates to release a previous transaction and in case no transaction is currently performed by the loT device, the circuitry determines to
- ignore the release indication, or
- consider the previous transaction, which is a previously performed and completed transaction, as failure.

According to an aspect 5, relating to the loT device according to any one of aspects 1 to 4, in case the release indication does not indicate to release a previous transaction, the circuitry determines to not release a transaction that is currently performed by the loT device. Optionally, the circuitry determines to not start a new transaction.

According to an aspect 6, relating to the loT device according to any one of aspects 1 to 5, the circuitry determines whether a transaction is currently performed by the loT device. The circuitry determines to not start a new transaction, in case it was determined that a transaction is currently performed by the loT device. The circuitry determines to start a new transaction, in case it was determined that no transaction is currently performed by the loT device.

According to an aspect 7, relating to the loT device according to any one of aspects 1 to 6, the circuitry performs the determination as to whether a transaction is currently performed by the loT device, by determining at least one of the following:
- a transaction is currently performed, in case a random access of the transaction has not been completed,
- a transaction is currently performed, in case the loT device has not yet performed a data transmission of the transaction to the reader, and
- a transaction is not currently performed, after the loT device performs a data transmission of the transaction to the reader.

According to an aspect 8, relating to the loT device according to any one of aspects 1 to 7, the message, including the release indication, further identifies intended targets of the release indication based on at least one of:
- an ID of one or more loT devices, optionally an access stratum ID or a random ID randomly selected by the loT device,
- a group ID, identifying a group of loT devices,
- time and frequency resources used for carrying the release indication,
- a 1-bit flag, identifying all loT devices,
- in case no dedicated loT identifier is included in message, all loT devices receiving the message are intended targets.

According to an aspect 9, relating to the loT device according to any one of aspects 1 to 8, the message includes a transaction ID identifying a transaction. The circuitry, in operation, determines to not start a new transaction in case the transaction ID of the message is the same as a transaction ID of a transaction previously completed successfully.

According to an aspect 10, relating to the loT device according to any one of aspects 1 to 9, the release indication is included in a field of the message. Optionally, the release indication is included in a separate release field of the message. One value of the release indication indicates to release the previous transaction and another value of the release indication indicates to not release the previous transaction. Alternatively, the release indication indicates to release the previous transaction when a value of the release indication is changed compared to the value of another release indication of a previous message. The release indication indicates to not release the previous transaction when a value of the release indication is not changed compared to the value of the other release indication of the previous message.

Optionally, the separate release field has a length of 1 or more bits. Optionally, the release indication is part of a transaction ID field in the message, release indication being located for example at the beginning or end of the transaction ID field. Optionally, the release indication is a transaction ID of the message, wherein the release indication indicates to release the previous transaction when a value of the transaction ID is changed compared to the value of the transaction ID of the previous message. The release indication indicates to not release the previous transaction when a value of the transaction ID is not changed compared to the value of the other transaction ID of the previous message.

According to an aspect 11, a reader is provided comprising:
circuitry, which determines how to set a release indication for a transaction, the release indication indicating to an Internet of Things, loT, device whether or not to release a previous transaction performed by the loT device with the reader, and
a transceiver, which transmits a transaction-related message to the loT device, wherein the message includes the release indication.

According to an aspect 12, relating to the reader according to claim 11, wherein determining how to set the release indication by the circuitry is based one at least one of:
- a priority of the transaction relating to the transaction-related message with the release indication,
- completion status of the previous transaction for at least one of the loT device and other loT devices, for example the completion status being completed successfully or not completed successfully,
- to avoid duplicate responses from loT devices that have already successfully completed the previous transaction, and
- whether or not the loT device is within coverage of multiple readers.

According to an aspect 13 relating to the reader according to claim 11 or 12, the message including the release indication is at least one of
- a paging message for triggering a transaction between the loT device and the reader,
- a random access response message that is received from the reader, transmitted in response to a first random access message transmitted from the loT device to the reader, and
- a reader-to-device message received from the reader after having received the paging message.

According to an aspect 14 relating to the reader according to any one of claims 11 to 13, wherein the release indication is included in a field of the message. Optionally, the release indication is included in a separate release field of the message. One value of the release indication indicates to release the previous transaction and another value of the release indication indicates to not release the previous transaction. Alternatively, the release indication indicates to release the previous transaction when a value of the release indication is changed compared to the value of another release indication of a previous message. The release indication indicates to not release the previous transaction when a value of the release indication is not changed compared to the value of the other release indication of the previous message.

Optionally, the separate release field has a length of 1 or more bits. Optionally, the release indication is part of a transaction ID field in the message, release indication being located for example at the beginning or end of the transaction ID field. Optionally, the release indication is a transaction ID of the message, wherein the release indication indicates to release the previous transaction when a value of the transaction ID is changed compared to the value of the transaction ID of the previous message. The release indication indicates to not release the previous transaction when a value of the transaction ID is not changed compared to the value of the other transaction ID of the previous message.

According to an aspect 15 relating to the reader according to any one of claims 11 to 14, wherein the message includes a transaction ID identifying a transaction. The circuitry determines to set a value of the transaction ID, taking into account that the loT device does not start a new transaction in case the transaction ID of the message is the same as a transaction ID of a transaction previously completed successfully.

According to an aspect 16, a method is provided comprising the following steps performed by an Internet of Things, loT, device:
receiving a transaction-related message from a reader, wherein the message includes a release indication that indicates whether or not to release a previous transaction performed by the loT device with the reader,
determining how to respond to the message, based on the release indication and based on a transaction currently performed by the loT device.

According to an aspect 17, a method is provided comprising the following steps performed by a reader:
determining how to set a release indication for a transaction, the release indication indicating to an Internet of Things, loT, device whether or not to release a previous transaction performed by the loT device with the reader, and
transmitting a transaction-related message to the loT device, wherein the message includes the release indication.

According to an aspect 18, an integrated circuit is provided, which, in operation, controls a process of an Internet of Things, loT, device, the process comprising the following steps performed by the loT device:
receiving a transaction-related message from a reader, wherein the message includes a release indication that indicates whether or not to release a previous transaction performed by the loT device with the reader, and
determining how to respond to the message, based on the release indication and based on a transaction currently performed by the loT device.

According to an aspect 19, an integrated circuit is provided, which, in operation, controls a process of a reader, the process comprising the following steps performed by the reader:
determining how to set a release indication for a transaction, the release indication indicating to an Internet of Things, loT, device whether or not to release a previous transaction performed by the loT device with the reader, and
transmitting a transaction-related message to the loT device, wherein the message includes the release indication.

## Claims

1. An Internet of Things, loT, device, comprising:
a transceiver, which in operation, receives a transaction-related message from a reader, wherein the message includes a release indication that indicates whether or not to release a previous transaction performed by the loT device with the reader,
a circuitry, which in operation, determines how to respond to the message, based on the release indication and based on a transaction currently performed by the loT device.

2. The loT device according to claim 1, wherein the message including the release indication is at least one of
- a paging message for triggering a transaction between the loT device and the reader,
- a random access response message that is received from the reader, transmitted in response to a first random access message transmitted from the loT device to the reader, and
- a reader-to-device message received from the reader after having received the paging message.

3. The loT device according to claim 1 or 2, wherein the circuitry, in operation, determines how to process the previous transaction based on the release indication of the message, and optionally wherein in case the release indication indicates to release a previous transaction, the circuitry, in operation, determines to release a transaction that is currently performed by the loT device.

4. The loT device according to claim 3, wherein in case the release indication indicates to release a previous transaction and in case no transaction is currently performed by the loT device, the circuitry, in operation, determines to
- ignore the release indication, or
- consider the previous transaction, which is a previously performed and completed transaction, as failure.

5. The loT device according to any one of claims 1 to 4, wherein in case the release indication does not indicate to release a previous transaction, the circuitry, in operation, determines to not release a transaction that is currently performed by the loT device, and
optionally wherein the circuitry, in operation, determines to not start a new transaction.

6. The loT device according to any one of claims 1 to 5, wherein the circuitry, in operation, determines whether a transaction is currently performed by the loT device,
wherein the circuitry, in operation, determines to not start a new transaction, in case it was determined that a transaction is currently performed by the loT device, and
wherein the circuitry, in operation, determines to start a new transaction, in case it was determined that no transaction is currently performed by the loT device.

7. The loT device according to any one of claims 1 to 6, wherein the circuitry, in operation, performs the determination as to whether a transaction is currently performed by the loT device, by determining at least one of the following:
- a transaction is currently performed, in case a random access of the transaction has not been completed,
- a transaction is currently performed, in case the loT device has not yet performed a data transmission of the transaction to the reader, and
- a transaction is not currently performed, after the loT device performs a data transmission of the transaction to the reader.

8. The loT device according to any one of claims 1 to 7, wherein the message, including the release indication, further identifies intended targets of the release indication based on at least one of:
- an ID of one or more loT devices, optionally an access stratum ID or a random ID randomly selected by the loT device,
- a group ID, identifying a group of loT devices,
- time and frequency resources used for carrying the release indication,
- a 1-bit flag, identifying all loT devices,
- in case no dedicated loT identifier is included in message, all loT devices receiving the message are intended targets.

9. The loT device according to any one of claims 1 to 8, wherein the message includes a transaction ID identifying a transaction,
wherein the circuitry, in operation, determines to not start a new transaction in case the transaction ID of the message is the same as a transaction ID of a transaction previously completed successfully.

10. The loT device according to any one of claims 1 to 9, wherein the release indication is included in a field of the message,
optionally wherein the release indication is included in a separate release field of the message,
wherein one value of the release indication indicates to release the previous transaction and another value of the release indication indicates to not release the previous transaction, or
wherein the release indication indicates to release the previous transaction when a value of the release indication is changed compared to the value of another release indication of a previous message, and wherein the release indication indicates to not release the previous transaction when a value of the release indication is not changed compared to the value of the other release indication of the previous message,
optionally wherein the separate release field has a length of 1 or more bits,
optionally wherein the release indication is part of a transaction ID field in the message, release indication being located for example at the beginning or end of the transaction ID field,
optionally wherein the release indication is a transaction ID of the message, wherein the release indication indicates to release the previous transaction when a value of the transaction ID is changed compared to the value of the transaction ID of the previous message, and wherein the release indication indicates to not release the previous transaction when a value of the transaction ID is not changed compared to the value of the other transaction ID of the previous message.

11. A reader comprising:
circuitry, which in operation, determines how to set a release indication for a transaction, the release indication indicating to an Internet of Things, loT, device whether or not to release a previous transaction performed by the loT device with the reader, and
a transceiver, which in operation, transmits a transaction-related message to the loT device, wherein the message includes the release indication.

12. The reader according to claim 11, wherein determining how to set the release indication by the circuitry is based one at least one of:
- a priority of the transaction relating to the transaction-related message with the release indication,
- completion status of the previous transaction for at least one of the loT device and other IoT devices, for example the completion status being completed successfully or not completed successfully,
- to avoid duplicate responses from loT devices that have already successfully completed the previous transaction, and
- whether or not the loT device is within coverage of multiple readers.

13. The reader according to claim 11 or 12, the message including the release indication is at least one of
- a paging message for triggering a transaction between the loT device and the reader,
- a random access response message that is received from the reader, transmitted in response to a first random access message transmitted from the loT device to the reader, and
- a reader-to-device message received from the reader after having received the paging message.

14. The reader according to any one of claims 11 to 13, wherein the release indication is included in a field of the message,
optionally wherein the release indication is included in a separate release field of the message,
wherein one value of the release indication indicates to release the previous transaction and another value of the release indication indicates to not release the previous transaction, or
wherein the release indication indicates to release the previous transaction when a value of the release indication is changed compared to the value of another release indication of a previous message, and wherein the release indication indicates to not release the previous transaction when a value of the release indication is not changed compared to the value of the other release indication of the previous message,
optionally wherein the separate release field has a length of 1 or more bits,
optionally wherein the release indication is part of a transaction ID field in the message, release indication being located for example at the beginning or end of the transaction ID field,
optionally wherein the release indication is a transaction ID of the message, wherein the release indication indicates to release the previous transaction when a value of the transaction ID is changed compared to the value of the transaction ID of the previous message, and wherein the release indication indicates to not release the previous transaction when a value of the transaction ID is not changed compared to the value of the other transaction ID of the previous message.

15. The reader according to any one of claims 11 to 14, wherein the message includes a transaction ID identifying a transaction,
wherein the circuitry, in operation, determines to set a value of the transaction ID, taking into account that the loT device does not start a new transaction in case the transaction ID of the message is the same as a transaction ID of a transaction previously completed successfully.
